# EUROPÄISCHE PATENTANMELDUNG

(11) **EP 4 707 148 A1**
(43) Veröffentlichungstag der Anmeldung: **11.03.2026**
(21) Anmeldenummer: 25197543.9
(22) Anmeldetag: 22.08.2025
(51) Int. Cl.: B62M 9/10, B60B 27/00, B60B 27/02, B60B 27/04, F16D 41/32

(54) **FAHRRADKOMPONENTE**

(30) Priorität: 02.09.2024 DE 102024125031
(71) Anmelder: DT Swiss AG, 2504 Biel (CH)
(72) Erfinder: Gasser, Thomas, CH-3036 Detligen (CH); Omlin, Nicolas, CH-3255 Rapperswil (CH); Tschanz, Andreas, 2543 Lengnau (CH); Pries, Timo, 91080 Spardorf (DE)
(74) Vertreter: BSB Patentanwälte Schütte & Engelen Partnerschaft mbB

(57) **Zusammenfassung**

Fahrradkomponente (80) für ein Fahrrad (100) mit einer Freilaufeinheit (9a, 9b) einer Freilaufeinrichtung (9), wobei die Freilaufeinheit (9a, 9b) eine Dreheinheit (2d, 10d) und eine mit der Dreheinheit (2d, 10d) koppelbare Zahnscheibeneinrichtung (20, 30) umfasst. Die Zahnscheibeneinrichtung (20, 30) umfasst eine Stirnverzahnung (22,32) mit axialen Eingriffselementen (22e,32e), welche geeignet zum Eingriff in korrespondierende Eingriffselemente (32e, 22e) einer anderen Zahnscheibeneinrichtung (30, 20) ist. Die Zahnscheibeneinrichtung (20,30) und die Dreheinheit (2d, 10d) sind jeweils als miteinander koppelbare Koppelkomponenten (9c-9f) ausgebildet und weisen jeweils eine Radialverzahnung (23,33) zum Eingriff ineinander auf und sind gemeinsam um eine zentrale Drehachse (5b) drehbar sind. Die Dreheinheit (2d, 10d) und die Zahnscheibeneinrichtung (20, 30) sind in Umfangsrichtung relativ zueinander zwischen einer Antriebsstellung (A) und einer Ruheposition (R) bewegbar, sodass vor Beginn einer Drehmomentübertragung erst eine Koppelkomponente (9c-9f) in Antriebsrichtung um einen Freiwinkel (FW) von wenigstens 5° gedreht werden muss, bis eine Drehmomentübertragung erfolgen kann, wenn sich die beiden Radialverzahnungen (33, 43) zuvor in einer Ruheposition (R) befinden.

## Beschreibung

Die vorliegende Erfindung betrifft eine Fahrradkomponente für ein wenigstens teilweise muskelbetriebenes Fahrzeug und insbesondere Fahrrad und umfasst wenigstens eine Freilaufeinheit einer Freilaufeinrichtung. Dabei weist eine Freilaufeinheit eine Dreheinheit und eine mit der Dreheinheit koppelbare Zahnscheibeneinrichtung auf. Die Zahnscheibeneinrichtung umfasst eine Stirnverzahnung mit axialen Eingriffselementen, welche geeignet zum Eingriff in korrespondierende Eingriffselemente einer anderen Zahnscheibeneinrichtung ist. Die Dreheinheit und die Zahnscheibeneinrichtung sind als koppelbare Koppelkomponenten ausgebildet und weisen jeweils eine Radialverzahnung zum Eingriff ineinander auf und sind um eine gemeinsame zentrale Drehachse drehbar.

Im Stand der Technik sind verschiedenste Fahrradkomponenten mit Freiläufen bekannt geworden. Hinterradnaben werden regelmäßig mit einem Freilauf ausgerüstet, wobei von der Anmelderin bevorzugt Zahnscheibenfreiläufe eingesetzt werden, bei denen zwei Zahnscheibeneinrichtungen mit Stirnverzahnungen eingesetzt werden. Die axialen Eingriffselemente an den Stirnseiten sind zur Drehmomentübertragung miteinander in Eingriff und werden im Freilaufzustand in axialer Richtung voneinander getrennt.

Vielfach werden auch Hinterradnaben mit einem Klinkenfreilauf eingesetzt, bei dem mehrere Sperrklinken vorgesehen sind, die sich zu Drehmomentübertragung um eine Achse parallel zur Nabenachse aufrichten und mit dem radial äußeren Ende der Sperrklinke in eine Innenverzahnung des Nabengehäuses eingreifen. Wenn der Fahrer aufhört zu treten, geraten die Sperrklinken außer Eingriff und der Freilaufzustand tritt ein.

Insbesondere bei vollgefederten Fahrrädern kann es bei Bergabfahrten durch das Gelände oder bei Sprüngen dazu kommen, dass sich die Geometrie des Antriebssystems leicht ändert, sodass beim Einfedern dann gegebenenfalls der Rotor der Hinterradnabe beschleunigt wird, sodass der Freilauf einkoppelt und die Kette ungewollt rückwärtstreibt, obwohl der Fahrer gar nicht tritt oder das Pedal bewegt. Dann spürt der Fahrer in dem Pedal einen sogenannten Pedalrückschlag, der unangenehm sein kann. Dieses Rücktreiben der Kette führt zu einem Rückschlag des Pedals und wirkt sich auf den Körper und die Leistung des Fahrers aus und beeinflusst diese negativ. Auch wenn der Pedalrückschlag an sich auf einer unebenen Fahrbahn häufig nicht vom Fahrer als ein solcher zuzuordnen ist.

Um einen Pedalrückschlag zu verhindern, ist von O-Chain (https://www.ochain.bike/pages/for-nerds) ein Mechanismus entwickelt worden, der an der Tretkurbel montiert wird und einen einstellbaren Winkelbereich zur Verfügung stellt, ab dem erst eine Übertragung eines Drehmoments zu Beginn des Tretens wirksam wird. Dadurch wird in entsprechender Weise auch ein Pedalrückschlag verhindert bzw. ist vom Fahrer nicht zu bemerken. Das bekannt gewordene und auf dem Markt befindliche System funktioniert zufriedenstellend. Nachteilig daran ist aber, dass eine zusätzliche Komponente benötigt wird, die das gesamte System komplizierter macht und zudem auch noch gewartet werden muss.

Mit der US 2024/0157728 A1 ist eine Fahrradnabe bekannt geworden, die mit einem Klinkenfreilauf ausgerüstet ist, und die bedarfsweise die Einstellung eines Totwinkels ermöglicht, ab dem eine Übertragung von Drehmoment erfolgt. Dazu wird bei Bedarf auf dem Klinkenträger ein Justageteil eingeführt, um den Totwinkel bei Bedarf zu verkleinern oder durch Entnahme des Justageteils zu vergrößern. Auch diese Freilaufnabe funktioniert zufriedenstellend. Nachteilig ist, dass eine neue Nabe benötigt wird. Es ist fraglich, ob das darauf aufbauende Produkt schon allgemein erhältlich ist. Außerdem arbeitet diese bekannte Nabe mit einem Klinkenfreilauf.

Es ist deshalb die Aufgabe der vorliegenden Erfindung eine Fahrradkomponente für wenigstens teilweise muskelbetriebene Fahrzeuge und insbesondere Fahrräder zur Verfügung zu stellen, welche über eine Freilaufeinrichtung mit einer Freilaufeinheit verfügt, bei der die Freilauffunktion über eine Zahnscheibeneinrichtung mit einer Stirnverzahnung gewährleistet wird.

Diese Aufgabe wird gelöst durch eine Fahrradkomponente mit den Merkmalen des Anspruchs 1 und durch eine Fahrradkomponente mit den Merkmalen des Anspruchs 14. Weitere Vorteile und Merkmale der vorliegenden Erfindung ergeben sich aus den Unteransprüchen, der allgemeinen Beschreibung und der Beschreibung der Ausführungsbeispiele.

Eine erfindungsgemäße Fahrradkomponente ist für wenigstens teilweise muskelbetriebene Fahrzeuge und insbesondere ein Fahrrad vorgesehen. Die erfindungsgemäße Fahrradkomponente umfasst wenigstens eine Freilaufeinheit einer Freilaufeinrichtung, wobei die Freilaufeinheit eine Dreheinheit und eine mit der Dreheinheit koppelbare Zahnscheibeneinrichtung umfasst. Die Zahnscheibeneinrichtung weist eine Stirnverzahnung mit axialen Eingriffselementen auf, welche geeignet zum Eingriff in korrespondierende Eingriffselemente einer anderen Zahnscheibeneinrichtung ist. Die Zahnscheibeneinrichtung und die Dreheinheit sind jeweils als miteinander koppelbare Koppelkomponenten ausgebildet und weisen jeweils eine Radialverzahnung zum Eingriff ineinander auf. Die Dreheinheit und die Zahnscheibeneinrichtung sind gemeinsam um eine zentrale Drehachse drehbar. Die Dreheinheit und die Zahnscheibeneinrichtung sind (insbesondere in wenigstens einer Konfiguration) in Umfangsrichtung relativ zueinander zwischen einer Antriebsstellung zur Übertragung von Drehmoment und einer Ruheposition bewegbar, sodass vor Beginn einer Drehmomentübertragung erst eine Koppelkomponente in Antriebsrichtung um (einen Freiwinkel von) wenigstens 5° gedreht werden muss, bis eine Drehmomentübertragung erfolgt bzw. erfolgen kann, wenn sich die beiden Radialverzahnungen zuvor in einer Ruheposition befinden. Dann bzw. danach kann in der Antriebsstellung ein Drehmoment in Antriebsrichtung übertragen werden.

Die erfindungsgemäße Fahrradkomponente hat viele Vorteile. Ein erheblicher Vorteil der erfindungsgemäßen Fahrradkomponente besteht darin, dass auf eine einfache Art und Weise zum Beispiel ein Pedalrückschlag verhindert oder reduziert werden kann. Dadurch, dass die Dreheinheit und die Zahnscheibeneinrichtung in Umfangsrichtung relativ zueinander bewegbar sind, kann ein Drehweg vorgegeben werden, ab dem erst eine Drehmomentübertragung erfolgt. Eine solche Ausgestaltung kann nicht nur positiv zur Vermeidung eines Pedalrückschlags sein (Englisch: "Pedal Kickback"). Ein solche Funktion kann auch generell in Freilaufsystemen sinnvoll sein, um immer eine definierte und im Wesentlichen gleiche Betriebsweise zur Verfügung zu stellen. Bei bekannten Freilaufsystemen mit Zahnscheibenfreiläufen ist ein Drehwinkel, bis eine Kraftübertragung stattfindet, abhängig von der Zähnezahl und der zufälligen Position der beiden Zahnscheiben zueinander. Durch die erfindungsgemäße Ausgestaltung kann insbesondere bei einer hohen Anzahl von axialen Eingriffselementen einer Zahnscheibeneinrichtung immer ein im Wesentlichen gleicher Drehwinkel zur Verfügung gestellt werden, bis eine Drehmomentübertragung erfolgt. Dieser Drehwinkel wird dann durch den Umfangsabstand zwischen der Antriebsstellung und der Ruheposition definiert.

Ein weiterer Vorteil der erfindungsgemäßen Fahrradkomponente besteht darin, dass es auch möglich ist, vorhandene Naben nachzurüsten, die dieses Merkmal bislang nicht aufweisen. Durch einen einfachen Austausch der Dreheinheit und/oder der Zahnscheibeneinrichtung kann eine bestehende Fahrradnabe umgerüstet werden.

Durch die Erfindung kann ein Rückschlag des Pedals durch ein Rücktreiben der Kette reduziert oder verhindert werden, sodass ein daraus resultierender Beitrag zur Ermüdung des Fahrers vermieden werden kann. Auch wenn ein Pedalrückschlag auf Grund der Unebenheiten der Fahrbahn bzw. des Geländes häufig nicht als ein solcher von dem Fahrer erkannt wird, tragen die einwirkenden Kräfte doch erheblich zu der Ermüdung des Fahrers bei.

Ein Rückwärtsdrehen des Antriebsstranges und somit auch der Kurbel, kann mit der Erfindung erheblich reduziert und insbesondere vollständig vermieden werden. Ein Pedalrückschlag und die daraus resultierende schnellere Ermüdung des Fahrers kann entscheidende Nachteile bezüglich der Leistungsfähigkeit mit sich bringen. Das wird durch die Erfindung auf einfache Art und Weise zuverlässig reduziert oder nahezu oder ganz verhindert.

In bevorzugten Weiterbildungen weisen die Koppelkomponenten jeweils eine Radialverzahnung mit abstehenden Radialzähnen und dazwischen angeordneten Radialnuten auf. Dabei ist es bevorzugt, dass die Radialverzahnung der einen Koppelkomponente als äußere Radialverzahnung und die Radialverzahnung der anderen (und damit zusammenwirkenden) Koppelkomponente als innere Radialverzahnung ausgebildet ist.

In bevorzugten Ausgestaltungen weist die Zahnscheibeneinrichtung eine äußere Radialverzahnung auf und die Dreheinheit umfasst eine innere Radialverzahnung. Möglich ist es aber auch, dass die Zahnscheibeneinrichtung eine innere Radialverzahnung aufweist, die mit einer äußeren Radialverzahnung auf der Dreheinheit zusammenwirkt.

In bevorzugten Ausgestaltungen ist im bestimmungsgemäßen Gebrauch wenigstens ein Radialzahn der äußeren Radialverzahnung in einer Radialnut der inneren Radialverzahnung angeordnet, um in der Antriebsstellung ein Drehmoment in Antriebsrichtung zu übertragen bzw. übertragen zu können.

Besonders bevorzugt ist eine Umfangslänge wenigstens einer Radialnut erheblich größer als eine entsprechende Umfangslänge eines Radialzahns (auf einem bzw. dem gleichen Durchmesser um die zentrale Achse). Entsprechend erstreckt sich wenigstens eine Radialnut über einen erheblich größeren Umfangswinkel als ein entsprechender Umfangswinkel eines Radialzahns. Das bedeutet, dass der Radialzahn mit einer erheblichen Bewegbarkeit (in Umfangsrichtung) innerhalb der Radialnut aufgenommen ist. Unter dem Begriff "erheblich größer" ist dabei zu verstehen, dass nicht nur ein minimales Spiel vorhanden ist, wie es zum Beispiel zum Einsetzen nötig ist, sondern, dass eine erhebliche Relativbewegung möglich ist. Beispielsweise können die Koppelkomponenten um einen Winkel von nahezu 0° oder von 5° oder 10° oder 15° oder 20° oder mehr relativ zueinander verschwenkt werden, bevor der Radialzahn am anderen Ende der Radialnut an die Begrenzung anschlägt. Über die unterschiedlichen Umfangslängen kann eine entsprechende Winkelverstellung zur Verfügung gestellt werden. In wenigstens einer Konfiguration oder Stellung ist ein Schwenkwinkel zwischen den Koppelkomponenten von wenigstens 5° (zwischen einer Ruheposition und einer Antriebsstellung) vorgesehen. Dieser Schwenkwinkel kann auch Freiwinkel genannt werden. Es sind unterschiedliche Konfigurationen möglich, wobei unterschiedliche Konfigurationen unterschiedliche Freiwinkel zur Verfügung stellen. Unterschiedliche Konfigurationen können unterschiedliche Einbausituationen mit den gleichen oder auch verschiedenen Bauteilen sein.

In einfachen Ausgestaltungen können zwei verschiedene Zahnscheibeneinrichtungen mit unterschiedlich vielen Radialzähnen eingesetzt werden oder wenigstens eine Zahnscheibeneinrichtung wird unterschiedlich eingesetzt.

In bevorzugten Ausgestaltungen ist wenigstens eine Zahnscheibeneinrichtung in wenigstens zwei unterschiedlichen Stellungen mit einer Dreheinheit koppelbar (und insbesondere darin einsetzbar). Dabei stehen in den unterschiedlichen Stellungen unterschiedliche Schwenkwinkel zwischen den Koppelkomponenten einer Freilaufeinheit zur Verfügung. Das bedeutet, dass beispielsweise Radialnuten mit unterschiedlichen Umfangslängen zur Verfügung stehen. Durch eine Montage bzw. das Einfügen eines Radialzahns (bzw. der Radialzähne) in eine entsprechend lange Radialnut (bzw. Radialnuten) wird eine entsprechende Schwenkbewegung ermöglicht. Dadurch kann auf einfache Art und Weise die Fahrradkomponente unterschiedliche und auch mehrere unterschiedliche Einstellungen bieten. Die Änderung der Einstellungen kann der Fahrer einfach und vorzugsweise ohne Werkzeug kurzfristig durchführen. So kann der Fahrer auch auf einer einzigen Tour mehrere unterschiedliche Einstellungen nacheinander vornehmen. Dabei ist es auch möglich, die Funktion in einer Konfiguration oder Stellung oder Einbausituation außer Betrieb zu setzen, sodass dann keine Verschwenkung möglich ist.

Besonders bevorzugt ist eine Mehrzahl oder Gruppe gleicher Radialzähne und/oder Radialnuten auf dem Umfang wenigstens einer Koppelkomponente verteilt angeordnet.

Vorzugsweise sind wenigstens zwei Gruppen unterschiedlicher Radialzähne und/oder Radialnuten (mit unterschiedlicher Umfangserstreckung) auf dem Umfang wenigstens einer Koppelkomponente verteilt angeordnet. Dabei können zum Beispiel zwei oder drei unterschiedliche Teilungen zur Verfügung gestellt werden. Das ermöglicht zum Beispiel die Einstellung von 2 unterschiedlich starken Einstellungen und beispielsweise einer Einstellung, bei der die beiden Koppelkomponenten (praktisch) spielfrei zueinander positioniert werden.

In bevorzugten Ausgestaltungen ist wenigstens eine Zahnscheibeneinrichtung axial verschiebbar in einer Dreheinheit aufgenommen.

Vorzugsweise kann eine Dreheinheit als Nabenteil ausgebildet sein. Eine andere Dreheinheit kann als Rotorbauteil ausgebildet sein. Es ist möglich, dass eine Dreheinheit als Nabengehäuse und eine andere Dreheinheit als Rotor ausgebildet sind.

Besonders bevorzugt ist eine Dreheinheit als Aufnahmering ausgebildet, der in Antriebsrichtung drehfest in dem Nabengehäuse aufnehmbar ist. Das ermöglicht es, dass das Nabengehäuse beispielsweise aus einem leichteren Material gefertigt wird, während der Aufnahmering aus einem festeren und schwereren Material gebildet wird. In bevorzugten Ausgestaltungen ist der Aufnahmering als Gewindering ausgebildet, der auf dem Außenumfang über wenigstens einen Gewindegang verfügt und in das Nabengehäuse eingeschraubt wird. In solchen Ausgestaltungen kann die Dreheinheit nur aus dem Aufnahmering bestehen.

In vorteilhaften Ausgestaltungen ist eine Vorbelastungseinrichtung vorgesehen, die wenigstens eine Freilaufeinheit in die Ruheposition vorbelastet. Die Ruheposition ist dabei, wie zuvor definiert, nicht die Antriebsstellung. Die Ruheposition ist dabei unabhängig davon, ob zwei Zahnscheibeneinrichtungen eines Freilaufs im Eingriff miteinander stehen, oder ob die beiden Zahnscheibeneinrichtungen außer Eingriff miteinander sind. Die Ruheposition einer Freilaufeinheit ist die Stellung, in der eine Drehmomentübertragung mit dieser Freilaufeinheit nicht (sofort) möglich ist. Eine Drehmomentübertragung ist erst möglich, wenn sich die beiden Koppelkomponenten der Freilaufeinheit in die Antriebsstellung bewegt haben. Das bedeutet hier, dass sich die Zahnscheibeneinrichtung relativ zu der Dreheinheit zunächst in Umfangsrichtung von der Ruheposition in die Antriebsstellung bewegen muss, bevor eine Drehmomentübertragung über diese Freilaufeinheit erfolgen kann. Unabhängig davon müssen zu einer effektiven Drehmomentübertragung beide Zahnscheibeneinrichtungen einer Freilaufeinrichtung in einem Eingriffszustand sein.

Durch die Vorbelastungseinrichtung wird sichergestellt, dass sich die Freilaufeinheit ohne äußere Einflüsse immer in der Ruheposition befindet. Eine solche Vorbelastungseinrichtung kann beispielsweise eine oder mehrere Federeinheiten umfassen. Möglich ist es auch, dass durch Ausnutzung von Reibung sich die Freilaufeinheit von selbst in die Ruheposition begibt, wenn der Fahrer nicht tritt.

In bevorzugten Ausgestaltungen ist eine Vorspanneinrichtung umfasst, die die beiden Freilaufeinheiten in axialer Richtung in die Eingriffsstellung vorspannt. Eine solche Vorspanneinrichtung kann eine Zahnscheibeneinrichtung einer Vorspanneinheit oder jeweils beide Zahnscheibeneinrichtungen über separate Vorspanneinheiten in axialer Richtung in die Eingriffsstellung vorspannen.

In bevorzugten Weiterbildungen dient die Vorspanneinrichtung auch als Vorbelastungseinrichtung und belastet wenigstens eine Freilaufeinheit in die Ruheposition vor.

In einfachen Ausgestaltungen ist die Vorspanneinrichtung als eine Spiralfeder ausgebildet oder umfasst wenigstens eine solche, die eine oder mehrere Windungen umfasst, die sich um die zentrale Achse herum erstrecken und welche die Zahnscheibeneinrichtung in die Eingriffsstellung vorspannt. Eine solche Spiralfeder kann an ihren Enden mit der Dreheinheit bzw. der Zahnscheibeneinrichtung verbunden sein, sodass diese Vorspanneinrichtung eine Freilaufeinheit zudem auch in die Ruheposition vorbelastet. Eine solche Ausgestaltung ist besonders einfach. Im Vergleich zu einer konventionellen Zahnscheibenfreilaufnabe benötigt sie keine weiteren Bauteile.

In bevorzugten Ausgestaltungen umfasst die Fahrradkomponente wenigstens ein Dämpferelement, welches zwischen den zwei Koppelkomponenten einer Freilaufeinheit aufgenommen ist. Das Dämpferelement kann beispielsweise aus einem elastischen Material (aus zum Beispiel einem elastischen Werkstoff oder zum Beispiel Gummi oder dergleichen) bestehen und die Erzeugung von Geräuschen bei der Überführung insbesondere in die Antriebsstellung und/oder in die Ruheposition reduzieren.

In vorteilhaften Ausgestaltungen ist wenigstens eine wechselbare Einstelleinheit an einer Freilaufeinheit aufgenommen, um eine (angepasste und variable) Einstellung des Umfangsweges bzw. Schwenkwinkels zwischen der Antriebsstellung und der Ruheposition einzustellen. Durch Austausch der Einstelleinheit können entsprechend andere Einstellungen zur Verfügung gestellt werden.

In allen Ausgestaltungen ist es möglich, dass wenigstens eine Zahnform an wenigstens einem Radialzahn in wenigstens einer Umfangsrichtung eckig, abgerundet oder schräg ausgebildet ist.

In allen Ausgestaltungen ist es auch möglich, dass wenigstens eine Radialverzahnung als radiale Schrägverzahnung ausgebildet ist. Darunter wird hier eine Verzahnung verstanden, bei der die Zähne radial innen und/oder außen vorgesehen sind und bei der die Zahnflanken nicht parallel zur zentralen Achse, sondern unter einem Winkel dazu verlaufen.

Eine weitere erfindungsgemäße Fahrradkomponente ist für wenigstens teilweise muskelbetriebene Fahrzeuge und insbesondere Fahrräder vorgesehen und umfasst eine Nabenachse, eine Freilaufeinrichtung und zwei Dreheinheiten. Dabei ist eine Dreheinheit mit einem Nabengehäuse und die andere Dreheinheit ist mit dem Rotor (drehfest oder auch einstückig) verbunden. Die Freilaufeinrichtung umfasst zwei Freilaufeinheiten, nämlich eine nabenseitige Freilaufeinheit und eine rotorseitige Freilaufeinheit. Die nabenseitige Freilaufeinheit umfasst eine mit dem Nabengehäuse gekoppelte Dreheinheit und eine nabenseitige Zahnscheibeneinrichtung. Die rotorseitige Freilaufeinheit umfasst eine mit dem Rotor gekoppelte Dreheinheit und eine rotorseitige Zahnscheibeneinrichtung. Die nabenseitige Zahnscheibeneinrichtung und die rotorseitige Zahnscheibeneinrichtung weisen jeweils eine Stirnverzahnung zum Eingriff ineinander auf und werden über wenigstens eine Vorspanneinrichtung in eine axiale Eingriffsstellung vorbelastet. Wenigstens eine Dreheinheit und die zugehörige Zahnscheibeneinrichtung sind als separate und miteinander koppelbare Koppelkomponenten ausgebildet und weisen jeweils eine Radialverzahnung zum Eingriff ineinander auf und sind gemeinsam um eine zentrale Drehachse drehbar. Die Dreheinheit und die Zahnscheibeneinrichtung sind in Umfangsrichtung relativ zueinander zwischen einer Antriebsstellung und einer Ruheposition bewegbar, sodass vor Beginn einer Drehmomentübertragung erst eine Koppelkomponente in Antriebsrichtung gedreht werden muss, bis eine Drehmomentübertragung erfolgt bzw. erfolgen kann, wenn sich die beiden Radialverzahnungen zuvor in einer Ruheposition befinden. In der Antriebsstellung kann dann ein Drehmoment in Antriebsrichtung übertragen werden.

Auch diese erfindungsgemäße Fahrradkomponente hat viele Vorteile.

Vorzugsweise ist das Nabengehäuse mit wenigstens zwei axial voneinander beabstandeten Nabenlagern drehbar gelagert, nämlich wenigstens einem näher an dem Rotor angeordneten rotorseitigen Nabenlager und wenigstens einem weiter von dem Rotor entfernten äußeren Nabenlager. Insbesondere ist der Rotor mit wenigstens zwei axial voneinander beabstandeten Rotorlagern drehbar gelagert, nämlich einem näher an dem Nabengehäuse angeordneten nabenseitigen Rotorlager und wenigstens einem weiter von dem Nabengehäuse entfernten äußeren Rotorlager.

Vorzugsweise ist die Stirnverzahnung der nabenseitigen Zahnscheibeneinrichtung axial zu dem Rotor ausgerichtet. Vorzugsweise ist die rotorseitige Zahnscheibeneinrichtung radial innerhalb des Rotors aufgenommen und ist über eine äußere Radialverzahnung mit einer radialen Innenverzahnung in dem Rotor in Antriebsrichtung drehfest mit dem Rotor gekoppelt. Vorzugsweise ist die Stirnverzahnung der rotorseitigen Zahnscheibeneinrichtung axial zu dem Nabengehäuse ausgerichtet. Besonders bevorzugt ist ein lichter Innendurchmesser der rotorseitigen Zahnscheibeneinrichtung größer als ein Außendurchmesser des nabenseitigen Rotorlagers.

In bevorzugten Ausgestaltungen umfasst die Vorspanneinrichtung wenigstens eine Spiralfeder mit einem Windungsdraht, der sich um eine Federachse herum erstreckt und dessen Windungsenden innerhalb von diagonal gegenüberliegenden Winkelsegmenten angeordnet sind. Vorzugsweise ist die nabenseitige Dreheinheit als Gewindering ausgebildet und in das Nabengehäuse eingeschraubt. Andere drehfeste Befestigungen sind möglich. Es ist auch möglich, dass die rotorseitige Dreheinheit als Gewindering ausgebildet und in den Rotor eingeschraubt ist.

Insbesondere ist es möglich, dass eine der Zahnscheibeneinrichtung einstückig mit dem Nabengehäuse oder dem Rotor ausgebildet ist.

Ein erheblicher Vorteil der Erfindung besteht in dem einfachen Aufbau und der hohen Zuverlässigkeit.

Die nabenseitige Zahnscheibeneinrichtung wird an dem Nabengehäuse aufgenommen und weist eine Stirnverzahnung auf, die insbesondere zu dem Rotor hin ausgerichtet ist. Die rotorseitige Zahnscheibeneinrichtung wird am Rotor aufgenommen und weist eine Stirnverzahnung auf, die insbesondere zum Nabengehäuse hinzeigt.

Vorzugsweise erstreckt sich der Windungsdraht der Spiralfeder (mehrfach) um eine Federachse herum von einem ersten Windungsende zu einem diagonal/radial gegenüberliegenden zweiten Windungsende.

Besonders bevorzugt kann die Ausgestaltung beschrieben werden, wie folgt: Auf einer (gedachten) Projektionsfläche (einer gedachten Projektion) der Spiralfeder sind die Projektionsabschnitte der Windungsenden in diagonal gegenüberliegenden Winkelsegementen der Projektionsfläche angeordnet. Dabei erstrecken sich die Winkelsegmente jeweils insbesondere über einen Winkelbereich von weniger als 45° und vorzugsweise weniger als 30°. Dabei wird insbesondere die (gedachte) Projektionsfläche der Spiralfeder durch eine Projektion der Spiralfeder in Richtung der Federachse auf eine Ebene quer (und insbesondere senkrecht) zu der Federachse definiert bzw. entsteht dadurch.

Vorzugsweise erstrecken sich die Winkelsegmente jeweils über einen Winkelbereich von weniger als 15° und besonders bevorzugt über weniger als 5°.

Insbesondere beträgt ein Umfangswinkel zwischen den Windungsenden (auf der Projektionsfläche) zwischen 135° und 225° und bevorzugt zwischen 150° und 210° und besonders bevorzugt zwischen 165° und 195° oder zwischen 170° und 190° oder zwischen 175° und 185°.

Es ist besonders bevorzugt, dass die Windungsenden angeschliffen sind. Das ermöglicht eine besonders zuverlässige Ausrichtung.

In allen Ausgestaltungen beträgt eine Anzahl der vollen Windungen des Windungsdrahts der Spiralfeder insbesondere zwischen zwei und sieben und vorzugsweise zwischen zwei und fünf und besonders bevorzugt zwischen zwei und vier.

Ein Verhältnis eines Außendurchmessers der Spiralfeder zu einem Durchmesser eines Windungsdrahtes ist insbesondere größer 10 und vorzugsweise größer 20 und kann insbesondere kleiner 30 betragen.

Es können verschiedene Materialien für die Windungsdrähte eingesetzt werden. Bevorzugt werden metallische Materialien.

In einer bevorzugten Weiterbildung ist von der rotorseitigen Zahnscheibeneinrichtung wenigstens die Stirnverzahnung radial (nicht nur im Rotor, sondern auch radial) innerhalb des Nabengehäuses aufgenommen (wenn sich die Nabe im bestimmungsgemäß montierten Zustand befindet). Insbesondere ist die rotorseitige Zahnscheibeneinrichtung wenigstens zu einem Drittel oder der Hälfte oder dreiviertel der axialen Länge oder sogar vollständig radial innerhalb des Nabengehäuses aufgenommen. Da die rotorseitige Zahnscheibeneinrichtung radial außen wenigstens teilweise in der radialen Innenverzahnung des Rotors aufgenommen ist, bedeutet dieses, dass das rotorseitige Ende des Nabengehäuses das nabenseitige Ende des Rotors über wenigstens einen Abschnitt überragt. Dadurch kommt es dazu, dass die rotorseitige Zahnscheibeneinrichtung radial sowohl von dem Rotor als auch von dem Nabengehäuse umgeben ist.

Insbesondere befinden sich die rotorseitige Zahnscheibeneinrichtung, das nabenseitige Rotorlager und ein rotorseitiger Nabenflansch an dem Nabengehäuse in einer gemeinsamen Querschnittsebene quer zu einer Symmetrieachse der Nabe oder quer zu einer Längserstreckung der Nabenachse. Dadurch wird eine kompakte Bauweise bei zuverlässiger Funktion ermöglicht. Der Aufbau ist einfach und ermöglicht eine optimale Ableitung der auftretenden Kräfte. Die Nabenachse erstreckt sich insbesondere durch das Nabengehäuse, die beiden Zahnscheibeneinrichtungen und durch den Rotor und nimmt an ihren Enden vorzugsweise jeweils einen Endanschlag auf.

In vorteilhaften Weiterbildungen ist die nabenseitige Zahnscheibeneinrichtung radial innerhalb des Nabengehäuses aufgenommen und ist über eine äußere Radialverzahnung an der nabenseitigen Zahnscheibeneinrichtung mit einer radialen Innenverzahnung in dem Nabengehäuse in Antriebsrichtung drehfest mit dem Nabengehäuse gekoppelt.

Besonders bevorzugt sind die nabenseitige Zahnscheibeneinrichtung und die rotorseitige Zahnscheibeneinrichtung beide jeweils gegen eine Vorspannkraft wenigstens einer Vorspanneinrichtung von einer Eingriffsstellung in eine Freilaufstellung überführbar. Besonders bevorzugt ist es dabei, dass sowohl der nabenseitigen Zahnscheibeneinrichtung als auch der rotorseitigen Zahnscheibeneinrichtung jeweils eine Vorspanneinrichtung zugeordnet ist. Beispielsweise können die Vorspanneinrichtungen insgesamt eine oder mehrere mechanische oder magnetische Federn umfassen. Werden beide Zahnscheibeneinrichtungen jeweils von außen aufeinander zu gedrückt oder durch einen entsprechenden Mechanismus aufeinander zugezogen, so erlaubt dies eine besonders zuverlässige Freilauffunktion und die Konstruktion einer hochwertigen Nabe.

Werden beide Zahnscheibeneinrichtungen jeweils separat in eine Eingriffsstellung vorgespannt, so kann ein Verklemmen oder Verkanten oder eine sonstige Störung an einer der Zahnscheibeneinrichtungen durch die andere Zahnscheibeneinrichtung kompensiert werden. Dazu sind die beiden Zahnscheibeneinrichtungen insbesondere schwimmend aufgenommen. Dadurch kann eine dreidimensionale Verkippung einer Zahnscheibeneinrichtung durch eine entsprechende dreidimensionale Verkippung der anderen Zahnscheibeneinrichtung ausgeglichen werden. Weiterhin kann bei Einsatz zweier separater Vorspanneinrichtungen auch eine Fehlfunktion einer Vorspanneinrichtung kompensiert werden. Diese Maßnahmen erhöhen die Zuverlässigkeit erheblich. In Kombination mit dem besonders großen Außendurchmesser der Radialverzahnungen wird so eine besonders zuverlässige Nabe zur Verfügung gestellt. Die hohe Führungsqualität durch die großen Außendurchmesser an den Radialverzahnungen führte dazu, dass nur geringe dreidimensionale Verkippungen auftreten. Gegebenenfalls werden solche Verkippungen durch die zwei Vorspanneinrichtungen zuverlässig ausgeglichen. Das gilt umso mehr, da die Zahnscheibeneinrichtung gegenüber der Dreheinheit von der Ruheposition in die Antriebsstellung verschwenken kann und die Führung deshalb nicht ganz eng sein kann.

Besonders bevorzugt ist ein lichter Innendurchmesser der nabenseitigen Zahnscheibeneinrichtung größer als ein Außendurchmesser des rotorseitigen Nabenlagers. Dadurch wird es ermöglicht, dass das rotorseitige Nabenlager axial weiter zu dem Rotor hin platziert werden kann. Dadurch können das rotorseitige Nabenlager und das nabenseitige Rotorlager praktisch unmittelbar nebeneinander angeordnet werden. Die Zahnscheibeneinrichtungen umgeben dann die jeweiligen Lager radial außen.

Vorzugsweise werden für wenigstens ein Nabenlager und für wenigstens ein Rotorlager Wälzlager verwendet, die jeweils über eine Mehrzahl an Wälzkörpern verfügen. Bevorzugterweise werden Rillenkugellager eingesetzt, die über einen Innenring und einen Außenring verfügen. Zwischen dem rotorseitigen Nabenlager und dem nabenseitigen Rotorlager ist vorzugsweise ein Abstandhalter vorgesehen. Als Abstandhalter kann beispielsweise eine dünne Scheibe oder eine kurze Hülse vorgesehen sein, um ein unabhängiges Drehen des jeweiligen Außenrings der relativ nah benachbarten Wälzlager zu ermöglichen.

In allen Ausgestaltungen ist es besonders bevorzugt, dass das Nabengehäuse mit den Nabenlagern insbesondere unmittelbar auf der Nabenachse drehbar gelagert ist. Ebenso ist es bevorzugt, dass der Rotor mit den Rotorlagern vorzugsweise unmittelbar auf der Nabenachse drehbar gelagert ist. Denkbar ist es aber auch, dass ein Nabenlager oder ein Rotorlager auf einer Art Hülse oder dergleichen angeordnet ist, die wiederum an der Nabenachse aufgenommen oder angeordnet wird.

In allen Ausgestaltungen ist es besonders bevorzugt, dass eine zentrale Querschnittsebene durch die rotorseitige Zahnscheibeneinrichtung die Wälzkörper des nabenseitigen Rotorlagers schneidet. Es ist bevorzugt, dass eine zentrale Querschnittsebene durch die nabenseitige Zahnscheibeneinrichtung die Wälzkörper des rotorseitigen Nabenlagers schneidet. Unter einer "zentralen Querschnittsebene" wird insbesondere eine mittlere Querschnittsebene verstanden, die sich in der axialen Mitte der jeweiligen Zahnscheibeneinrichtung befindet. Eine solche zentrale Querschnittsebene kann zum Beispiel in axialer Richtung mittig durch die Radialverzahnung der Zahnscheibeneinrichtung im Ruhezustand der Nabe verlaufen. Im Ruhezustand befinden sich die Freilaufeinrichtungen im Eingriffszustand und regelmäßig befinden sich die beiden Zahnscheibeneinrichtungen in einem mittleren axialen Bereich und können in beide axialen Richtungen gegen die Vorspannkraft der Vorspanneinrichtung ausgelenkt werden.

In bevorzugten Ausgestaltungen ist ein axialer Abstand der zentralen Querschnittsebene durch die rotorseitige Zahnscheibeneinrichtung von der Querschnittsebene durch die Wälzkörper (Wälzkörperebene) des nabenseitigen Rotorlagers kleiner als der Durchmesser eines Wälzkörpers und insbesondere kleiner als der Radius eines Wälzkörpers und/oder kleiner als eine minimale Wandstärke der Nabenachse. Dadurch wird eine besonders effektive Kraftableitung ermöglicht.

Es ist bevorzugt, dass ein axialer Abstand der zentralen Querschnittsebene durch die nabenseitige Zahnscheibeneinrichtung von der Querschnittsebene durch die Wälzkörper des rotorseitigen Nabenlagers kleiner ist als der Durchmesser eines Wälzkörpers und insbesondere kleiner als der Radius eines Wälzkörpers und/oder kleiner als eine minimale Wandstärke der Nabenachse.

In bevorzugten Ausgestaltungen ist ein Außendurchmesser der rotorseitigen Zahnscheibeneinrichtung größer als ein Außendurchmesser der Ritzelaufnahme. Das erlaubt eine besonders zuverlässige Funktion und zeigt eine besonders große Zahnscheibeneinrichtung, da die standardisierte Ritzelaufnahme einen kleineren Außendurchmesser aufweist als der Außendurchmesser der rotorseitigen Zahnscheibeneinrichtung. Besonders bevorzugt ist ein Außendurchmesser der Stirnverzahnung der rotorseitigen Zahnscheibeneinrichtung größer als ein Außendurchmesser der Ritzelaufnahme. Dadurch wird deutlich, dass sich die Stirnverzahnung auf einem sehr großen Durchmesser befindet und eine große Kontaktfläche bietet.

Besonders bevorzugt wird eine Vielzahl von Zähnen vorgesehen, wobei an der Zahnscheibe 48, 60, 72, 80, 90, 100, 110 oder 120 oder noch mehr Zähne ausgebildet sein können. Beispielsweise können beide Zahnscheibeneinrichtungen jeweils eine gleiche Anzahl von zum Beispiel 90 oder 120 (+/-10) Zähnen aufweisen. Denkbar ist es auch, dass die Zähnezahlen an den beiden Zahnscheibeneinrichtungen unterschiedlich sind, sofern jedenfalls die Teilung und Anordnung der einzelnen Axialzähne an der Stirnverzahnung gleich ist.

In allen Ausgestaltungen ist es möglich und bevorzugt, dass die Stirnverzahnung an einer Stirnseite einer Zahnscheibeneinrichtung ausgebildet ist. Insbesondere ist die Stirnseite quer und insbesondere senkrecht zur Rotationsachse ausgebildet. Möglich ist es aber auch, dass die Stirnverzahnung als Kegelverzahnung ausgeführt ist und somit eine Neigung zu einer Ebene senkrecht auf der Symmetrieachse aufweist. Wesentlich ist, dass die beiden Zahnscheibeneinrichtungen entsprechend passend und aufeinander abgestimmt ausgebildet sind, um einen zulässigen Eingriff der jeweiligen Zahnsegmente ineinander zu ermöglichen.

Vorzugsweise weist die nabenseitige Zahnscheibeneinrichtung eine äußere Radialverzahnung auf, welche mit einer radialen Innenverzahnung in dem Nabengehäuse im Eingriff steht und axial demgegenüber bewegbar ist. Das bedeutet, dass die nabenseitige Zahnscheibeneinrichtung axial gegenüber der Innenverzahnung in dem Nabengehäuse bewegbar ist. Die radiale Innenverzahnung in dem Nabengehäuse muss nicht unmittelbar in dem Nabengehäuse ausgebildet sein, sondern kann zum Beispiel auch an einem Gewindering ausgebildet sein, der in dem Nabengehäuse aufgenommen ist und insbesondere in das Nabengehäuse eingeschraubt wird.

Durch einen separaten Gewindering wird es ermöglicht, dass bei Abnutzung oder dergleichen nur der Gewindering ausgetauscht werden muss, während das Nabengehäuse weiterverwendet werden kann.

Es ist möglich, dass der Gewindering aus einem belastbareren Material als das Nabengehäuse hergestellt wird. Beispielsweise kann der Gewindering aus Stahl gefertigt sein. Möglich ist es aber auch, dass der Gewindering aus einem leichteren Material wie zum Beispiel Aluminium oder Titan oder einer entsprechenden Legierung gefertigt wird. Sollte ein Verschleiß an der Radialverzahnung in dem Gewindering auftreten, kann dieser bei Bedarf entfernt und ausgetauscht werden.

In bevorzugten Weiterbildungen weist der Gewindering an der axialen Außenseite eine zentrale Vertiefung und insbesondere zentrische Vertiefung auf. Die zentrale Vertiefung kann eine konische Vertiefung bilden. In die zentrale Vertiefung taucht (im bestimmungsgemäß eingebauten Zustand) vorzugsweise ein an der Stirnseite des Rotors ausgebildeter Konusabschnitt berührungsfrei ein. Das ermöglicht einen kompakten Aufbau. Außerdem kann zwischen dem Konusabschnitt und der konischen Vertiefung ein (dünner) Dichtspalt ausgebildet werden.

Besonders bevorzugt ist der Gewindering an der radialen Außenseite in axialer Richtung (erheblich) breiter ausgebildet als an der radialen Innenseite. Das kann durch die zentrale Vertiefung bewirkt werden, sodass eine axiale Breite radial außen mindestens 5% oder 10% oder vorzugsweise mehr als 15% oder sogar 20% größer ist als radial innen. Insbesondere ist eine axiale Breite radial außen zwischen 10% und 25% größer als radial innen.

In vorteilhaften Weiterbildungen weist der Gewindering auf der dem Rotor abgewandten axialen Innenseite einen (konischen) Stützabschnitt auf, welcher an einer entsprechend (konisch) ausgebildeten Aufnahme in dem Nabengehäuse anliegt. Werden der Stützabschnitt und die Aufnahme in dem Nabengehäuse entsprechend konisch ausgebildet, kann axialer Bauraum eingespart werden. Ein rechtwinklig zur zentralen Symmetrieachse ausgebildeter Stützabschnitt und eine entsprechend rechtwinklig verlaufende Aufnahme ermöglichen eine einfachere Fertigung.

Insbesondere erstreckt sich das Außengewinde des Gewinderings axial nach außen über die nabenseitige Zahnscheibeneinrichtung hinaus und erstreckt sich bis radial über die rotorseitige Zahnscheibeneinrichtung hin und überdeckt diese wenigstens zum Teil. Durch eine solche Ausgestaltung kann die Eingriffsfläche des Gewinderings vergrößert werden, ohne in axialer Richtung mehr Bauraum zu benötigen.

Vorzugsweise umfasst das Außengewinde des Gewinderings wenigstens zwei separat ausgebildete und durchgängige Gewindegänge. Vorzugsweise umfasst das Innengewinde in dem Nabengehäuse wenigstens zwei separat ausgebildete und durchgängige Gewindegänge. Dadurch kann ein Gewinde ausgebildet werden, welches eine hohe Traglast ermöglicht und gleichzeitig nur eine geringe Axialkraft beim Treten erzeugt.

Grundsätzlich wird beim Fahren durch die Antriebskraft des Fahrers der Gewindering weiter in das Nabengehäuse hineingetrieben, da die Antriebskraft über die äußere Radialverzahnung der Zahnscheibeneinrichtung und die radiale Innenverzahnung an dem Gewindering auf diesen übertragen wird. Dadurch wird ein Einschraubmoment erzeugt, welches zu einer Aufspreizung des Nabengehäuses führen kann. Durch ein mehrgängiges Gewinde kann bei gleicher Festigkeit die Belastung im Nabengehäuse gesenkt und damit eine Aufspreizung des Nabengehäuses verhindert werden.

In allen Ausgestaltungen ist es bevorzugt, dass wenigstens eine Zahnscheibeneinrichtung einen Eingriffskörper aufweist, an dem die Stirnverzahnung über eine radiale Höhe und die Radialverzahnung über eine axiale Länge ausgebildet sind. Dabei ist die axiale Länge der Radialverzahnung insbesondere größer als die radiale Höhe der Stirnverzahnung. Die axiale Länge kann insbesondere wenigstens das 1,5-fache der radialen Höhe betragen. Dadurch wird eine sehr zuverlässige und präzise axiale Führung der Zahnscheibeneinrichtung gewährleistet.

Insbesondere ist eine axiale Erstreckung des Eingriffskörpers größer als ein Durchmesser eines Wälzkörpers eines Rotorlagers und/oder Nabenlagers. Vorzugsweise ist eine axiale Erstreckung des Eingriffskörpers größer als die Hälfte oder 2/3 einer axialen Breite eines Wälzlagers und insbesondere größer als die Hälfte oder 2/3 einer axialen Breite des nabenseitigen Rotorlagers. Insbesondere beträgt eine axiale Breite des Eingriffskörpers wenigstens 5 mm und vorzugsweise wenigstens 6 mm. Die axiale Breite kann insbesondere zwischen 4,5 mm und 8 mm betragen. In einer konkreten Ausgestaltung beträgt die axiale Breite der Radialverzahnung einer Zahnscheibeneinrichtung 6,16 mm, während der lichte Innendurchmesser zwischen 25 mm und 35 mm und in einer konkreten Ausgestaltung etwa 30 mm beträgt. Der Außendurchmesser (inklusive der Radialverzahnung) der Zahnscheibeneinrichtung beträgt vorzugsweise zwischen 30 mm und 40 mm und kann in einem konkreten Fall 37,8 mm betragen.

Der Gewindering weist insbesondere eine axiale Länge zwischen 5 mm und 10 mm auf. Vorzugsweise beträgt eine axiale Länge des Gewinderings 7 mm (+/-1 mm). Der Außendurchmesser des Gewinderings kann zwischen 35 und 45 mm und in einem konkreten Beispiel etwa 44 mm betragen. Der lichte Innendurchmesser der radialen Innenverzahnung liegt in einem konkreten Beispiel bei 30 mm.

Die zentrale Vertiefung oder konische Vertiefung der axialen Außenseite des Gewinderings weist vorzugsweise einen Winkel zwischen 15° und 45° auf und kann in einer bevorzugten Ausgestaltung etwa 30° betragen. Dabei ergibt sich dann eine Tiefe der konischen Vertiefung von zum Beispiel 0,9 oder 1 mm. Vorzugsweise weist der Konusabschnitt an der Stirnseite des Rotors einen entsprechend angepassten Winkel auf. Der Winkel kann identisch sein, kann aber auch davon abweichen.

In bevorzugten Ausgestaltungen ist eine axiale Länge der Radialverzahnung größer als die radiale Höhe der Stirnverzahnung und insbesondere um wenigstens den Faktor 1,5 größer.

Vorzugsweise ist ein Abstand der beiden zentralen Querschnittsebenen durch die rotorseitige Zahnscheibeneinrichtung und die nabenseitige Zahnscheibeneinrichtung kleiner als die axiale Breite beider Zahnscheibeneinrichtungen im Eingriffszustand. Insbesondere ist ein Abstand der beiden zentralen Querschnittsebenen durch die rotorseitige Zahnscheibeneinrichtung und die nabenseitige Zahnscheibeneinrichtung kleiner als die doppelte axiale Länge der Radialverzahnung eines Eingriffskörpers wenigstens einer Zahnscheibeneinrichtung. Es ist möglich und bevorzugt, dass ein Abstand der beiden Querschnittsebenen kleiner ist als eine 1,2-fache oder eine 1-fache axiale Breite des Gewinderings.

Besonders bevorzugt sind die nabenseitige Zahnscheibeneinrichtung und die rotorseitige Zahnscheibeneinrichtung im Wesentlichen gleich ausgebildet. Das bedeutet, dass vorzugsweise identische Eingriffskörper für die beiden Zahnscheibeneinrichtungen verwendet werden. Insbesondere werden auch im Wesentlichen gleiche oder sogar identische Vorspanneinrichtungen verwendet. Bevorzugt werden Vorspannfedern eingesetzt. Zum Beispiel Spiralfedern oder auch konisch gewickelte Federn. Diese können auch die Vorbelastung in die Ruheposition in Umfangsrichtung zur Verfügung stellen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: eine perspektivische Darstellung einer anmeldungsgemäßen Nabe;
- Figur 4: eine Vorderansicht der Nabe nach Figur 3;
- Figur 5a: einen Schnitt A-A durch die Nabe nach Figur 4;
- Figuren 5b,5c: Ausgestaltungen erfindungsgemäßer Fahrradkomponenten in perspektivischer Ansicht;
- Figuren 5d-5k: Ansichten verschiedener erfindungsgemäßer Fahrradkomponenten;
- Figur 6a: ein vergrößertes Detail "X" aus Figur 5a;
- Figur 6b-d: Ansichten einer Spiralfeder einer Vorspanneinrichtung;
- Figur 7: eine schematische geschnittene Ansicht des Rotors der Nabe nach Figur 5a;
- Figur 8: ein vergrößertes Detail einer Variante einer anmeldungsgemäßen Nabe;
- Figur 9: eine schematische geschnittene Ansicht eines zweiteiligen Rotors für eine anmeldungsgemäße Nabe;
- Figur 10: ein schematisches Detail des zweiteiligen Rotors nach Fig. 9;
- Figur 11a,b: schematische Ansichten einer Freilaufeinrichtung und der Zahnscheibeneinrichtung für eine anmeldungsgemäße Nabe; und
- Figur 12a-c: eine schematische perspektivische Ansicht und schematische Querschnitte eines Gewinderings für eine anmeldungsgemäße Nabe.

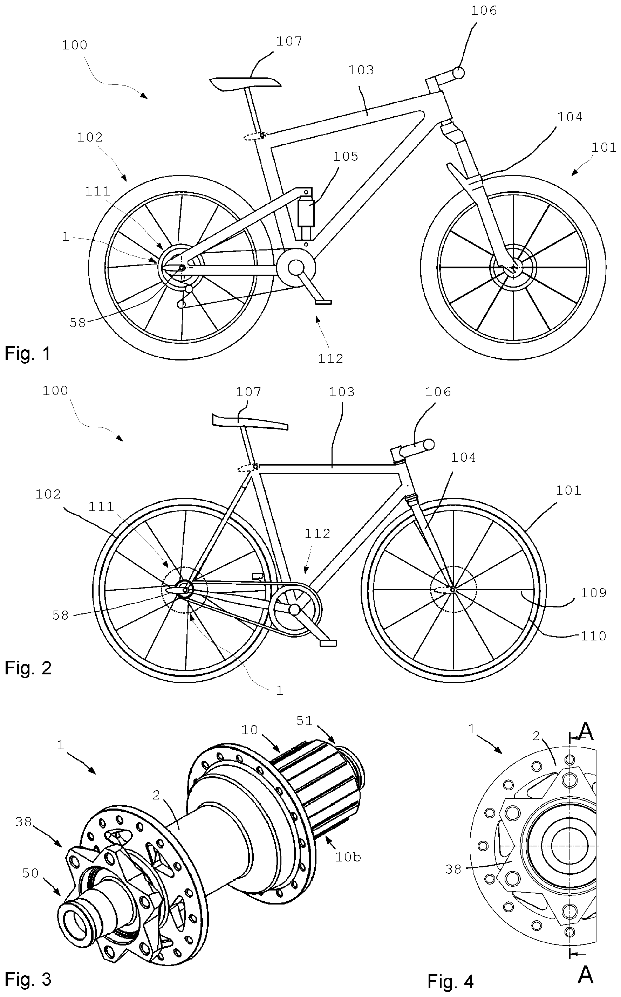

In den Figuren 1 und 2 sind jeweils ein Mountainbike bzw. ein Rennrad 100 dargestellt, die jeweils mit einer erfindungsgemäßen und als Nabe 1 ausgebildeten Fahrradkomponente 80 ausgerüstet sind. Das Mountainbike bzw. Rennrad 100 verfügt jeweils über ein Vorderrad 101 und ein Hinterrad 102. An dem Hinterrad 102 wird jeweils eine Nabe 1 eingesetzt. Die beiden Räder 101, 102 verfügen über Speichen 109 und eine Felge 110 und eine Ritzeleinrichtung 111. Grundsätzlich können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 1 der Räder kann jeweils über ein Spanneinrichtung 58 (z. B. Steckachse oder Schnellspanner) an dem Rahmen befestigt sein.

Die in den Fahrrädern gemäß Figur 1 und 2 jeweils am Hinterrad 102 eingesetzten Naben 1 zeigt Figur 3 in einer Perspektive und Figur 4 in einer Vorderansicht.

Die Nabe 1 verfügt über ein Nabengehäuse 2 und einen Rotor 10 sowie eine Bremsscheibenaufnahme 38. Auf der Außenseite des Rotors 10 ist eine Ritzelaufnahme 10b zur Aufnahme eines Ritzelpaketes mit einer entsprechenden Anzahl von Ritzeln vorgesehen. An den beiden Enden der Nabe 1 sind Endanschläge 50, 51 vorgesehen, die hier aufgesteckt sind, aber gegebenenfalls auch eingesteckt oder angeschraubt sein können. Wie hier zu erkennen, sind die Endanschläge 50, 51 hohl ausgebildet und dienen zur Aufnahme einer Spannachse 59, mit der die Nabe 1 an dem Rahmen befestigt werden kann.

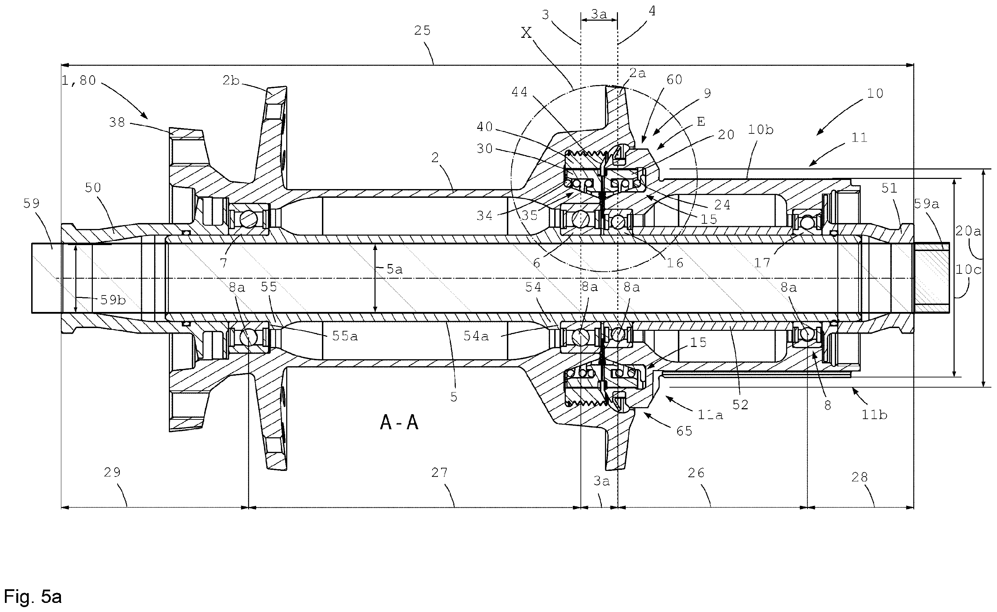

Figur 5a zeigt den Schnitt A-A aus Figur 4. Die Nabe 1 weist hier eine Einbaulänge 25 von 148 mm auf. Die Nabe 1 umfasst die hohl ausgebildete Nabenachse 5, auf der das Nabengehäuse 2 über die Nabenlager 6 und 7 drehbar gelagert ist. Der Rotor 10 ist ebenfalls über Wälzlager 16 und 17 hier unmittelbar auf der Nabenachse 5 drehbar gelagert.

Auf der Nabenachse 5 ist näher an dem Rotor 10 eine Verdickung 54 mit einem radialen Absatz 54a und an dem äußeren Ende unterhalb des Nabenflansches 2b eine Verdickung 55 mit einem radialen Absatz 55a ausgebildet. Das rotorseitige Nabenlager 6 liegt an dem radialen Absatz 54a und das am anderen Ende des Nabengehäuses 2 angeordnete äußere Nabenlager 7 liegt an dem Absatz 55a der Nabenachse 5 an. Axial nach außen schließt sich an das äußere Nabenlager 7 der Endanschlag 50 an, der hier auf die Nabenachse 5 aufgeschoben ist und über einen nach außen ragenden Doppelflansch das Nabengehäuse nach außen abgedichtet.

Zum Rotor 10 hin schließt sich an das rotorseitige Nabenlager 6 ein (dünner und hier scheibenförmiger) Abstandhalter 53 und daran das nabenseitige Rotorlager 16 an. Zwischen dem nabenseitigen Rotorlager 16 und dem äußeren Rotorlager 17 ist als Abstandhalter eine Hülse 52 auf die Nabenachse 5 geschoben. Axial nach außen schließt sich an das äußere Rotorlager 17 der Endanschlag 51 an. Die Nabe 1 wird fest in den Rahmen eingespannt.

Die hohle Nabenachse 5 weist einen inneren lichten Durchmesser 5a auf, der je nach Ausgestaltung 12 mm, 15 mm oder auch 16 mm oder 17 mm oder mehr betragen kann. Durch die hohle Nabenachse 5 kann eine Spannachse 59 einer Spanneinrichtung 58 durchgeschoben werden, um die Nabe 1 an einem Rahmen eines Fahrrads zu befestigen. An einem Ende kann die Spannachse 59 beispielsweise ein Endstück 59a mit einem Außengewinde aufweisen, mit dem die Spannachse 59 in ein entsprechendes Gewinde an dem Rahmen eingeschraubt werden kann. An dem anderen Ende kann ein entsprechender Spannmechanismus vorgesehen sein, um die Nabe 1 zuverlässig an einem Rahmen aufzunehmen und zu spannen.

Der Außendurchmesser 59b der Spannachse 59 und der Innendurchmesser 5a der hohlen Nabenachse 5 sind so aufeinander abgestimmt, dass einerseits ein (relativ) ungestörtes Durchführen der Spannachse durch die hohle Nabenachse 5 ermöglicht wird, während andererseits die hohle Nabenachse 5 auch von der Spannachse 59 im Betrieb abgestützt werden kann, wenn sich aufgrund der Belastungen lokale Durchbiegungen ergeben. Dadurch wird die Stabilität der Nabe 1 insgesamt erhöht.

Möglich ist es aber auch, dass auf diese zusätzliche Abstützung verzichtet wird. Dann wird eine Spannachse 59 eingesetzt, die über weite Teile der Nabenachse 5 einen deutlichen radialen Abstand zwischen Nabenachse 5 und Spannachse 59 aufweist, um das Einführen oder Herausnehmen der Spannachse gar nicht oder äußerst wenig zu beeinträchtigen.

Anmeldungsgemäß sind die Nabenlager 6 und 7 und auch die Rotorlager 16 und 17 jeweils als Wälzlager 8 ausgeführt und weisen jeweils eine Mehrzahl von Wälzkörpern 8 auf. Hier im Ausführungsbeispiel sind die Wälzlager alle als Rillenkugellager ausgeführt.

Die Nabe 1 wird in axialer Richtung fest in dem Rahmen eingespannt. Der Kraftfluss verläuft dabei beispielsweise von dem linken Ende in Figur 5a durch den Endanschlag 50, den inneren Lagerring des äußeren Nabenlagers 7 und über den Absatz 55a der Verdickung 55 in die hohle Nabenachse 5 hinein. Von dort wird die eingeleitete Kraft über den Absatz 54a der Verdickung 54 in den inneren Lagerring des Nabenlagers 6 und durch den Abstandhalter 53 zwischen dem rotorseitigen Nabenlager und dem nabenseitigen Rotorlager 16 geleitet. Von dort tritt die Kraft in den inneren Lagerring des nabenseitigen Rotorlagers 16 ein und wird über die Hülse 52 zu dem Lagerinnenring des äußeren Rotorlagers 17 und von dort durch den Endanschlag 51 wieder in den Rahmen eingeleitet. Das Nabengehäuse 2 und der Rotor 10 werden radial und axial durch die Rillenkugellager gehalten.

Das Nabengehäuse 2 weist auf der Rotorseite einen Nabenflansch 2a und auf der anderen Seite ein Nabenflansch 2b auf. An den Nabenflanschen 2a, 2b können die Speichen befestigt werden. Gegenüber von dem Rotor 10 ist an dem anderen und äußeren Nabenende die Bremsscheibenaufnahme 38 vorgesehen.

Radial innerhalb des rotorseitigen Nabenflansches 2a ist in dem Nabengehäuse ein Gewindering 40 eingeschraubt, der eine radiale Innenverzahnung 43 aufweist, in die die nabenseitige Zahnscheibeneinrichtung 30 eingesetzt ist. An dem nabenseitigen Ende des Rotors 10 ist radial innerhalb des Endabschnitts 60 die rotorseitige Zahnscheibeneinrichtung 20 der Freilaufeinrichtung 9 eingesetzt. Der Endabschnitt 60 erstreckt sich von einem nabenseitigen Ende 60a an der nabenseitige Stirnseite 10a axial nach außen bis zu einem anderen bzw. äußeren Ende 60b.

Sowohl die rotorseitige Zahnscheibeneinrichtung 20 als auch die nabenseitige Zahnscheibeneinrichtung 30 verfügen jeweils über eine äußere Radialverzahnung 23, 33, die mit entsprechenden radialen Innenverzahnungen 43 in dem Gewindering 40 und im Inneren des Endabschnitts 60 kämmen. Darüber sind die rotorseitige Zahnscheibeneinrichtung 20 und die nabenseitige Zahnscheibeneinrichtung 30 in Antriebsrichtung in der Antriebsstellung "A" drehfest mit dem Rotor 10 bzw. dem Nabengehäuse 2 gekoppelt.

Gleichzeitig können beide Zahnscheibeneinrichtungen 20, 30 jeweils in axialer Richtung zwischen einer Eingriffsstellung E und einer Freilaufstellung F bewegt werden. Durch die Stirnverzahnung bzw. Schrägverzahnung (auf der Stirnseite) bedingt, gleiten die schrägen Zahnflächen der Stirnverzahnung beim Rückwärtstreten aneinander ab und drücken die Zahnscheibeneinrichtungen 20, 30 in axialer Richtung auseinander. Wird Antriebskraft aufgebracht, treten die Stirnverzahnungen wieder miteinander in Eingriff, nachdem die Koppelkomponenten (nabenseitig und/oder rotorseitig) von der Ruheposition "R" wieder in die Antriebsstellung "A" gedreht wurden.

Die Zahnscheibeneinrichtung 20 wird durch die Vorspanneinrichtung 24, hier in Form einer zylindrischen Spiralfeder, in die dargestellte Eingriffsposition E vorbelastet. Entsprechend wird die Zahnscheibeneinrichtung 30 durch einer ebenfalls hier als zylindrische Spiralfeder ausgebildete Vorbelastungseinrichtung oder Vorspanneinrichtung 34 axial in die Eingriffsstellung E vorbelastet. Das bedeutet hier, dass die nabenseitige Zahnscheibeneinrichtung 30 in Richtung auf den Rotor vorbelastet wird, während die rotorseitige Zahnscheibeneinrichtung 20 durch die Vorbelastungseinrichtung oder Vorspanneinrichtung 24 in Richtung auf das Nabengehäuse 2 vorgespannt wird. Die Wirkung der Vorspanneinrichtung kann über mechanische Federn oder auch magnetische Federn oder auch pneumatisch bewirkt werden.

Gleichzeitig wird wenigstens eine Zahnscheibeneinrichtung 20, 30 in die Ruheposition "R" gedrängt, wenn der Fahrer nicht tritt. Möglich ist es, dass nur eine Zahnscheibeneinrichtung 20, 30 zwischen der Ruheposition "R" und der Antriebsstellung "A" verschwenkbar und in die Ruheposition "R" vorbelastet ist. Möglich ist es aber auch, dass beide Zahnscheibeneinrichtungen 20, 30 jeweils zwischen einer jeweiligen Ruheposition "R" und der Antriebsstellung "A" verschwenkbar sind. Die jeweiligen Schwenkwinkel können gleich oder auch unterschiedlich sein.

Der Rotor 10 verfügt über einen Rotorkörper 11, der sich von dem nabenseitigen Ende 11a zu dem gegenüberliegenden und äußeren Ende 11b erstreckt. Auf der Außenoberfläche des Rotorkörpers 11 ist die Ritzelaufnahme 10b vorgesehen. Dort kann ein Ritzel oder mehrere Ritzel oder es kann ein Ritzelpaket befestigt werden.

An dem nabenseitigen Ende 11a ist der Endabschnitt 60 mit einem vergrößerten Durchmesser ausgebildet. Innerhalb des Endabschnitts 60 ist die rotorseitige Zahnscheibeneinrichtung 20 aufgenommen, die einen Außendurchmesser 20a aufweist, der größer ist als ein Außendurchmesser 10c der Ritzelaufnahme 10b des Rotorkörpers 11. Der Außendurchmesser 30a entspricht dem Außendurchmesser 20a. Auch die axialen Breiten 20b und 30b sind gleich.

Wie in Figur 5a klar erkennbar, schneiden die Wälzkörperebenen bzw. Querschnittsebenen 3, 4 (durch die Wälzkörper 8a des rotorseitigen Nabenlagers 6 und des nabenseitigen Rotorlagers 16) auch jeweils die Zahnscheibeneinrichtungen 20, 30. Es ist erkennbar, dass die Wälzkörperebene bzw. Querschnittsebene 4 durch das nabenseitige Rotorlager 16, die Vorspanneinrichtung 24 und die Radialverzahnung der rotorseitigen Zahnscheibeneinrichtung 20 und durch den Nabenflansch 2a des Nabengehäuses verläuft. Weiterhin wird eine radial außen auf dem Endabschnitt 60 angeordnete Dichtungseinheit 68 durch die Querschnittsebene bzw. Wälzkörperebene 4 geschnitten.

Eine solche Anordnung, bei der die Querschnittsebenen bzw. Wälzkörperebenen 3 und 4 die Eingriffsbereiche der Radialverzahnungen der beiden Zahnscheibeneinrichtungen und die jeweils zugeordneten Wälzlager 6, 16 schneiden, bietet eine optimale Ableitung der auftretenden Belastungen im Betrieb. Der Abstand 26 der beiden Rotorlager 16, 17 kann hier sehr groß gewählt werden, da die rotorseitige Zahnscheibeneinrichtung 20 radial außerhalb des nabenseitigen Rotorlagers 16 angeordnet ist und dieses radial umgibt. Ein Abstand 27 der beiden Nabenlager 6, 7 kann ebenfalls sehr groß gewählt werden, da auch die nabenseitige Zahnscheibeneinrichtung 30 radial außerhalb des rotorseitigen Nabenlagers 6 angeordnet ist und dieses radial umgibt.

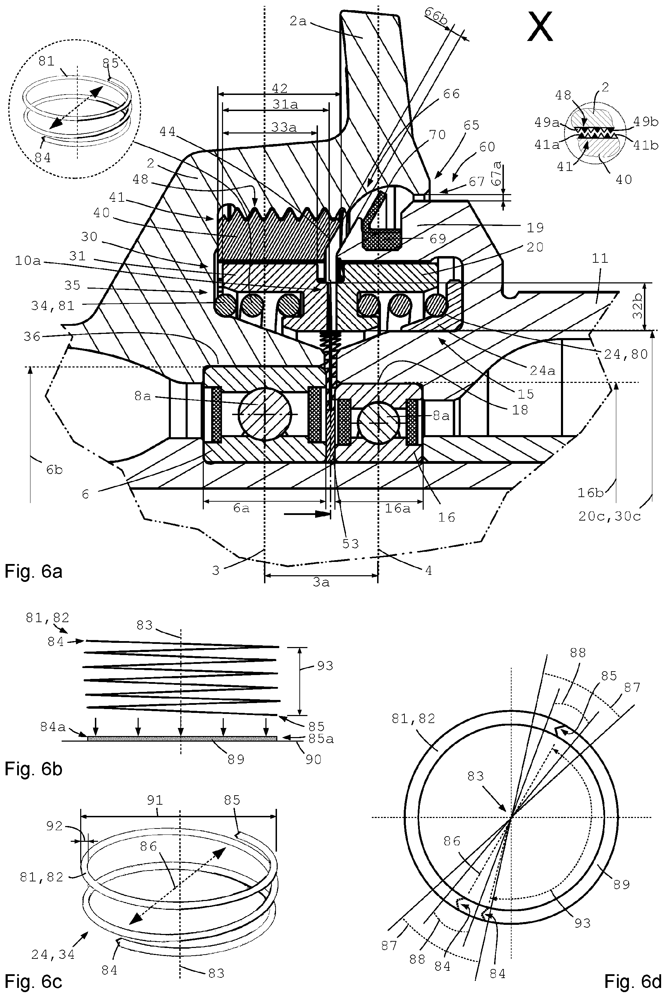

Ein lichter Innendurchmesser 20c, 30c der beiden Zahnscheibeneinrichtungen ist jeweils (erheblich) größer als ein Außendurchmesser der jeweiligen Wälzlager 6, 16. Die lichten Innendurchmesser 20c, 30c (vgl. Fig. 6) sind erheblich größer, da die Wälzlager 6, 16 an den Außendurchmessern 6b, 16b jeweils eine Innenwandung 18, 36 am Rotor 10 bzw. Nabengehäuse 2 tragen, die sich jeweils fingerartig unter den Aufnahmen 15, 35 aufeinander zu erstrecken.

Radial außerhalb der Innenwandung 18 am Rotor ist die Aufnahme 15 ausgebildet, in der die rotorseitige Zahnscheibeneinrichtung 20 drehfest aufgenommen ist. Radial außerhalb der Innenwandung 36 in dem Nabengehäuse ist die Aufnahme 35 ausgebildet, in der die nabenseitige Zahnscheibeneinrichtung 30 drehfest an dem Gewindering 40 aufgenommen ist.

Mit der Konstruktion wird bei einer Einbaubreite 25 von zum Beispiel 148 mm ein Abstand 27 der beiden Nabenlager von zwischen 55 mm und 60 mm und hier konkret zum Beispiel 57 mm ermöglicht. Der Abstand 3a der beiden Querschnittsebenen 3, 4 kann sehr gering sein und hier zum Beispiel 7 mm, 8 mm oder 9 mm betragen. Der Abstand 26 der beiden Rotorlager 16, 17 kann zwischen 27 mm und 35 mm liegen und beträgt hier zum Beispiel 32 mm. Der Abstand 28 kann bei 18 mm und der Abstand 29 bei 33 mm liegen.

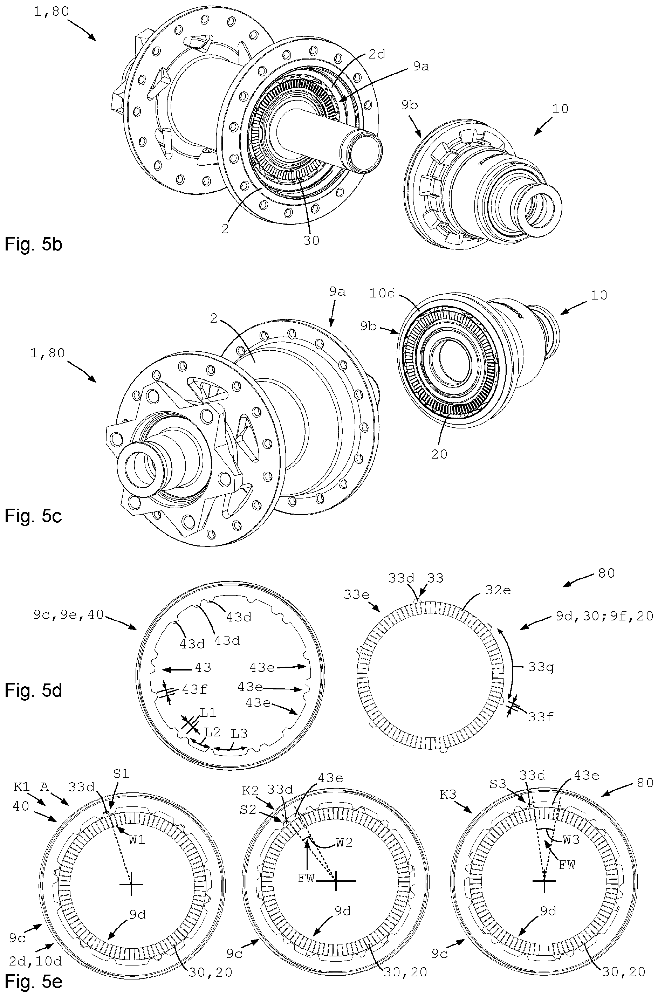

Die Figuren 5b und 5c zeigen perspektivische Ansichten von erfindungsgemäßen Nabenkomponenten 80 bzw. Fahrradnaben 1, bei denen jeweils ein Nabengehäuse 2 und ein Rotor 10 vorgesehen sind, die über eine Freilaufeinrichtung 9 mit zwei Freilaufeinheiten 9a und 9b ausgerüstet sind. Die Zahnscheibeneinrichtungen 20 bzw. 30 sind in den Dreheinheiten 10d bzw. 2d aufgenommen.

Figur 5d zeigt eine erste Ausgestaltung einer Fahrradkomponente 80, wobei diese die Koppelkomponenten 9c und 9d umfasst. Der Aufnahmering 40 bildet die Koppelkomponente 9c und ist hier als Gewindering 40 ausgebildet, der in das Nabengehäuse 2 eingeschraubt werden kann. Der Aufnahmering 40 verfügt über eine Radialverzahnung 43, die hier als radiale Innenverzahnung ausgebildet ist und über eine Mehrzahl von auf dem Innenumfang verteilt angeordneten Radialzähnen 43d verfügt. Zwischen den einzelnen Radialzähnen 43d sind Radialnuten 43e ausgebildet bzw. angeordnet, wobei sich die Umfangslängen L1, L2 und L3 verschiedener Radialnuten 43e signifikant voneinander unterscheiden. Eine Umfangsbreite 43f der Radialzähne 43d ist hier jeweils gleich ausgebildet ist.

Rechts neben dem Aufnahmering 40 ist eine Zahnscheibeneinrichtung 30 oder 20 abgebildet, die als Koppelkomponente 9d oder 9f dienen kann. Hier im Ausführungsbeispiel sind die Zahnscheibeneinrichtungen 20 und 30 identisch ausgebildet. Es ist aber auch möglich, dass sich die beiden Zahnscheibeneinrichtungen 20, 30 voneinander unterscheiden. Eine der Zahnscheibeneinrichtungen kann z.B. konventionell ausgestaltet sein und keine Umfangsdrehung relativ zur Dreheinheit 2d oder 10d erlauben.

Die Zahnscheibeneinrichtung 30 verfügt hier über eine Radialverzahnung 33, die als radiale Außenverzahnung ausgebildet ist und über eine Mehrzahl von Radialzähnen 33d verfügt. Zwischen den Radialzähnen 33d ist hier jeweils eine Radialnut 33e vorgesehen, die hier jeweils eine Umfangslänge 33g aufweist, die erheblich größer als eine Umfangslänge 33f eines Radialzahns 33d ist.

Die Außenabmessungen des Aufnahmerings 40 und der Zahnscheibe 30 (20) sind so aufeinander abgestimmt, dass die Zahnscheibe 30 (20) im Inneren des Aufnahmerings 40 aufnehmbar ist. Dabei können die Radialzähne 33d (23d) in die Radialnuten 43e (23e) eingeführt werden. Je nachdem, in welcher der Radialnuten 43e (23e) die Radialzähne 33d (23d) eingeführt werden, ist die Zahnscheibe 30 (20) spielfrei in dem Aufnahmering 40 (Rotor 10 bzw. Dreheinheit 10d) aufgenommen oder nicht. Beim Einführen in die Radialnuten 43e mit Umfangslänge L1 ergibt sich eine geringe oder gar keine Winkelverstellmöglichkeit. Wenn die Radialzähne 33d in Radialnuten 43e mit Umfangslänge L2 eingeführt werden, ergibt sich eine mittlere Verstellbarkeit und beim Einführen in Radialnuten 43e mit Umfangslänge L3 eine große Winkelverstellmöglichkeit.

Über dem Umfang bzw. dem Innenumfang des Aufnahmerings 40 sind mehrere Gruppen von Radialnuten 43d vorgesehen.

Figur 5e zeigt drei verschiedene Einbausituationen (Konfigurationen K1-K3 oder Stellungen S1-S3), wobei links das Einfügen der Zahnscheibe 30 mit den Radialzähnen 33d in die Radialnuten 43e mit geringster Umfangslänge L1 abgebildet ist (Konfiguration K1). Eine Winkelverstellung W1 ist zwischen den beiden Koppelkomponenten 9d und 9f ist hier (praktisch) nicht möglich, da die beiden Koppelkomponenten im Prinzip spielfrei miteinander verbunden sind. Eine Axialbewegung ist möglich, um die Funktion des Freilaufs zu ermöglichen, aber keine Winkelverstellung.

Die mittlere Darstellung zeigt die Zahnscheibe 30 (20) eingesetzt in die Radialnuten 43e mit mittlerer Umfangslänge L2 (Konfiguration K2), wodurch sich eine Freiwinkel FW mit einer Winkelverstellmöglichkeit W2 der beiden Koppelkomponenten 9d, 9f zueinander ergibt.

In der rechten Darstellung von Figur 5e ist die Zahnscheibe 30 (20) mit den Radialzähnen 33d (23d) in die größten Radialnuten 43e mit einer Umfangslänge L3 abgebildet (Konfiguration K3). Dadurch ergibt sich ein Freiwinkel FW mit einer Winkelverstellungsmöglichkeit W3, die erheblich größer ist als die Winkelverstellmöglichkeit W2. Hier sind 10° oder 15° Verstellung möglich. Die Verstellmöglichkeit kann auch größer oder kleiner gewählt werden.

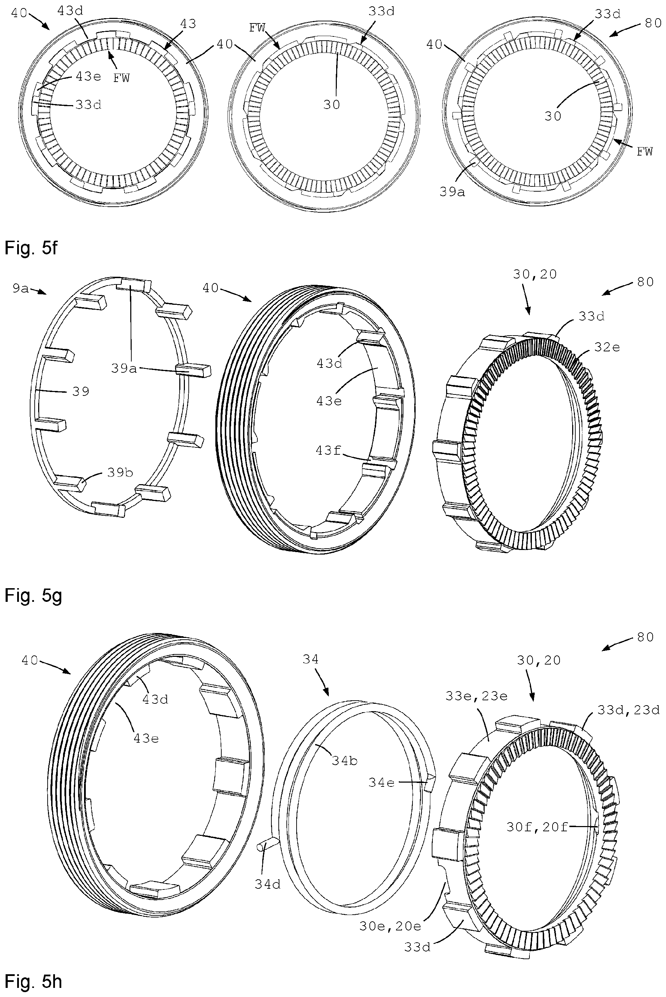

Figur 5f zeigt drei Varianten, wobei unterschiedliche Ausgestaltungen der Konturen der Radialzähne 33d, 43d und Radialnuten 33e und 43e abgebildet sind. Die Radialzähne und Radialnuten können an den Ecken (nahezu) rechteckig oder einseitig abgeschrägt oder auch abgerundet ausgebildet sein. Eine Flanke kann einseitig oder beidseitig radial verlaufen oder einseitig oder beidseitig geneigt sein. In der rechten Darstellung von Figur 5f sind in dem Aufnahmering 40 noch Dämpferelemente 39a eingesetzt, die eine Geräuschdämpfung ermöglichen.

Figur 5g zeigt eine Variante, bei der ein Ringelement 39 mit Dämpferelementen 39a oder Einstellelementen 39b eingesetzt wird, um entweder Geräusche im Betrieb zu dämpfen und/oder eine Anpassung der Winkelverstellung bzw. Wegeverstellung zwischen Antriebsstellung und Ruheposition zu ermöglichen. Die Abmessungen der Dämpferelemente 39a bzw. Einstellelemente 39b können entsprechend variiert werden. Durch einen einfachen Austausch des Ringelements 39 können die Eigenschaften kurzfristig verändert werden.

Figur 5h zeigt eine Variante, bei der die Vorspanneinrichtung 34 nicht nur die Zahnscheibeneinrichtung 30 (oder 20) axial in die Eingriffsrichtung vorspannt, sondern auch in Umfangsrichtung in die Ruheposition vorbelastet. Die Vorspanneinrichtungen 34 dient hier auch als Vorbelastungseinrichtung 34b und sorgt für eine relative Drehbewegung der beiden Koppelkomponenten bzw. der Zahnscheibe 30 (20) relativ zu dem Aufnahmering 40 (Rotor 10), sodass sich die Freilaufeinheit 9a (9b) aus Figur 5h im Normalfall (ohne zu treten) in der Ruheposition befindet. Die abgewinkelten Enden 34d und 34e können in den entsprechenden Aussparungen 30e, 30f (20e, 20f) an der Zahnscheibeneinrichtung 30 (20) positioniert werden, um die Funktion sicherzustellen.

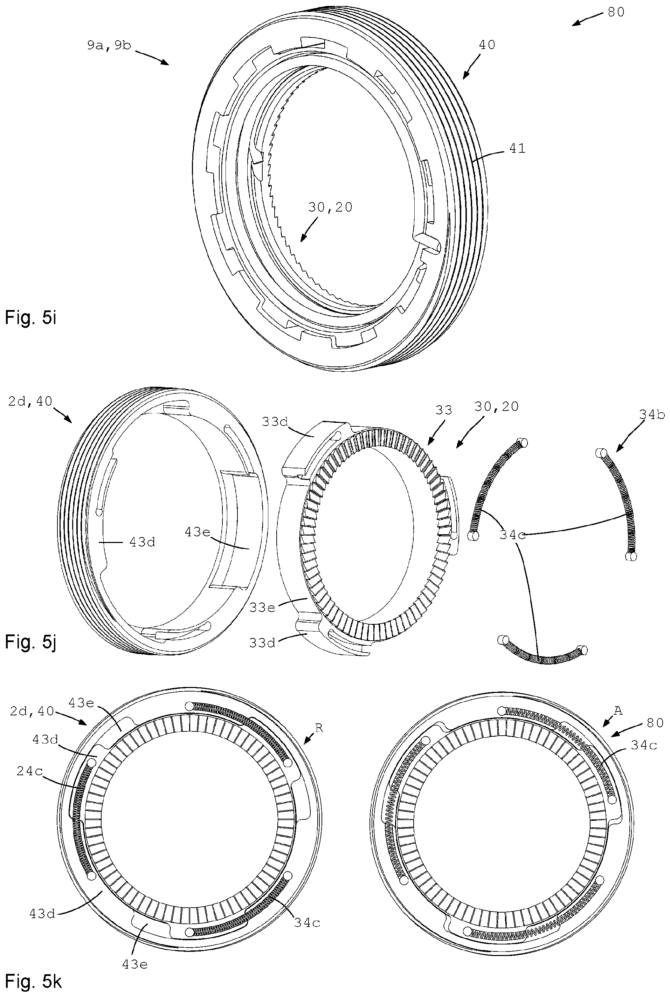

Figur 5i zeigt das Ausführungsbeispiel nach der vorhergehenden Figur in einer perspektivischen Ansicht im zusammengebauten Zustand. Hier ist die Freilaufeinheit 9a mit der darin aufgenommenen Zahnscheibeneinrichtung 30 (oder 20) zu sehen, wobei auf dem Außenumfang ein Gewindegang 41 des Außengewindes des Aufnahmerings 40 zu sehen ist, der hier als Gewindering ausgebildet ist.

Figur 5j zeigt eine weitere Ausgestaltung, bei der eine separate Vorbelastungseinrichtung 34b vorgesehen ist, die hier drei separate Federeinheiten 34c umfasst, die in Umfangsrichtung in dem Aufnahmering 40 als Dreheinheit 2d aufgenommen sind. Die Federeinheiten 34c sind an einem Ende in Umfangsrichtung mit der Dreheinheit 2d (bzw. 10d) verbunden und an dem anderen Ende mit der Zahnscheibeneinrichtung 30 (bzw. 20) verbunden. Dadurch ziehen die drei Federeinheiten 34c die Zahnscheibeneinrichtung 30 jeweils in die Ruheposition "R", wenn der Fahrer nicht tritt.

Figur 5k zeigt eine Vorderansicht des Ausführungsbeispiels oder einer leichten Abwandlung nach Figur 5j, wobei hier links die Ruheposition "R" und rechts die Antriebsstellung "A" abgebildet sind.

Figur 6a zeigt das vergrößerte Detail X aus Figur 5a. Auf der Nabenachse 5 sind das rotorseitige Nabenlager 6 mit einer Breite 6a und dessen nabenseitige Rotorlager 16 mit einer Breite 16a zu erkennen, zwischen denen ein dünner Abstandhalter 53 erkennbar ist. Der Abstandhalter 53 dient dazu, die beiden äußeren Lagerringe der Lager 6, 16 voneinander zu entkoppeln. Eine Breite des Abstandhalters 53 ist geringer als die Hälfte oder ein Viertel oder ein Achtel der axialen Breite 16a des nabenseitigen Rotorlagers 16.

Das rotorseitige Nabenlager 6 trägt eine Wandung 36 des Nabengehäuses 2, die sich fingerartig und insbesondere keilartig auf den Rotor 10 zu erstreckt und das rotorseitige Nabenlager 6 radial außen umgibt. Das Nabengehäuse 2 wird durch die Wandung 36 getragen. Radial darum herum ist die Aufnahme 35 ausgebildet, in der die nabenseitige Zahnscheibeneinrichtung 30 aufgenommen ist. Die nabenseitige Zahnscheibeneinrichtung 30 wird durch die Vorspanneinrichtung 34 in die Eingriffsstellung E vorbelastet.

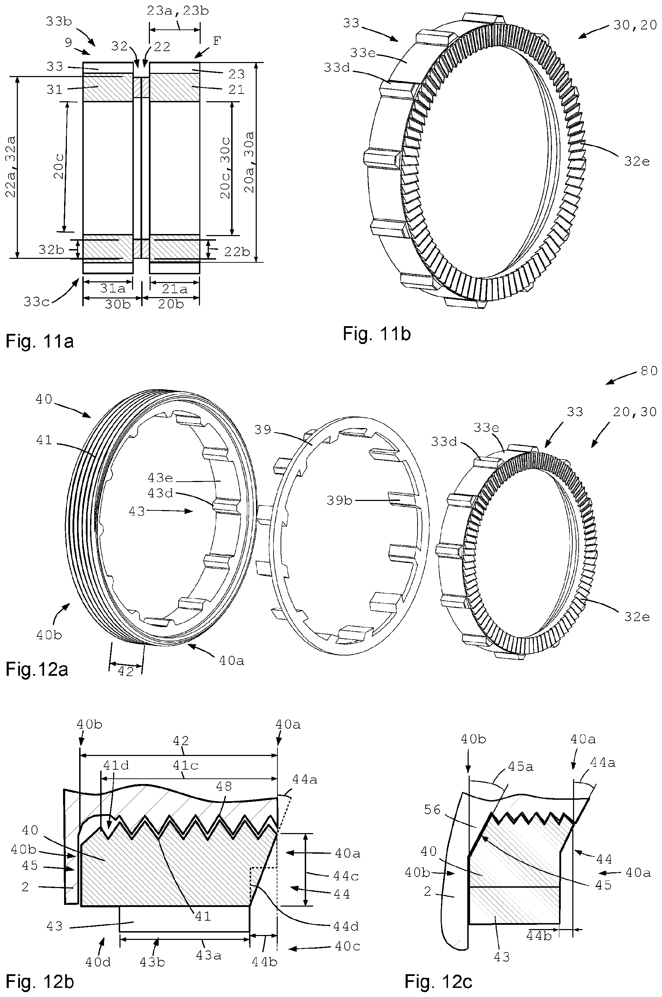

Die Zahnscheibeneinrichtung 30 verfügt über eine äußere Radialverzahnung 33 (vergleiche Figur 11b), die mit einer radialen Innenverzahnung 43 (vergleiche Figur 12a) in dem Aufnahmering 40 bzw. Gewindering 40 kämmt. Der Gewindering 40 ist über das Außengewinde 41 in das Innengewinde 48 in dem Nabengehäuse 2 eingeschraubt.

An der nabenseitigen Stirnseite 10 des Rotors 10 ist eine Aufnahme 15 ausgebildet, in der die rotorseitige Zahnscheibeneinrichtung 20 aufgenommen ist. Die rotorseitige Zahnscheibeneinrichtung 20 verfügt über eine zum Nabengehäuse ausgerichtete Stirnverzahnung 22. Die Stirnverzahnung 22 kämmt mit der Stirnverzahnung 32 an der nabenseitigen Zahnscheibeneinrichtung 30. Die Zahnscheibeneinrichtungen 20, 30 werden über die Vorspanneinrichtungen 24, 34 jeweils axial aufeinander zu gedrückt.

Der Halter bzw. Einsatz 24a in der Aufnahme 15 an der nabenseitigen Stirnseite 10 des Rotors 10 sorgt dafür, dass identische Zahnscheibeneinrichtungen 20, 30 verwendet werden können, wodurch die Montage erleichtert wird, da Verwechslungen ausgeschlossen werden können. Produktionstechnisch ist es nötig, die Aufnahme 15 vergrößert zu gestalten, um die radiale Innenverzahnung 13 in dem Endabschnitt 60 des Rotors 10 anfertigen zu können. Es herrschen gleiche Bedingungen in den Aufnahmen 15, 35.

Grundsätzlich können identische Zahnscheibeneinrichtungen 20, 30 verwendet werden, auch wenn nur auf einer Seite eine Winkelverstellung einer Freilaufeinheit 9a, 9b erfolgen kann. Dazu ist es sinnvoll, die Außengestaltung so vorzunehmen, dass eine Zahnscheibeneinrichtung 20, 30 in beide Dreheinheiten 2d, 10d einsetzbar und dort funktionstüchtig ist. Auch wenn nur auf einer Seite eine Winkelverstellung zwischen Ruheposition "R" und Antriebsstellung "A" möglich ist.

Eine axiale Breite 33a einer Radialverzahnung 33 der nabenseitigen Zahnscheibeneinrichtung 30 und die (vorzugsweise) identische axiale Breite 23a der Radialverzahnung 23 der rotorseitigen Zahnscheibeneinrichtung 20 kann insbesondere größer sein als eine axiale Breite 16a oder auch eine axiale Breite 6a eines Wälzlagers 6 bzw. 16.

Die axiale Breite 42 des Gewinderings 40 ist radial außen größer, da der Gewindering rotorseitig eine zentrale Vertiefung 44 aufweist, die hier als konische Vertiefung bzw. Anfasung 44 (vergleiche Figur 12b) ausgebildet ist. Dadurch kann die Gewindelänge des Außengewindes 41 vergrößert werden, was die Stabilität erhöht.

Die Eingriffskörper 21, 31 der rotorseitigen Zahnscheibeneinrichtung 20 und der nabenseitigen Zahnscheibeneinrichtung 30 weisen hier jeweils eine Radialverzahnung 23, 33 über eine axiale Länge 23a bzw. 33a auf, die deutlich größer ist als eine radiale Höhe 22b bzw. 32b der Stirnverzahnung 22 bzw. 32. Dadurch wird eine präzise Führung der beiden Zahnscheibeneinrichtungen in axialer Richtung gewährleistet. Die axiale Länge 21a, 31a der Eingriffskörper 21, 31 ist jeweils um die axiale Breite der Stirnverzahnungen größer.

Der Gewindering 40 kann über ein mehrgängiges Gewinde mit dem Nabengehäuse 2 verschraubt sein. Dazu ist oben rechts in Figur 6 eine optionale Ausgestaltung eingezeichnet, bei der zwei durchgängige und separate Gewindegänge 41a und 41b mit entsprechenden Gewindegängen 49a und 49b im Nabengehäuse 2 verschraubt werden.

Die Dichtungseinrichtung 65 zur Dichtung der Freilaufeinrichtung 9 vor Umwelteinflüssen umfasst hier einen nahezu horizontal ausgebildeten (äußeren) schmalen Dichtspalt 67 mit einer geringen radialen Höhe bzw. lichten Abmessung 67a, die weniger als 0,5 mm beträgt. Der äußere Dichtspalt 67 erstreckt sich zwischen einem vergrößerten Durchmesserbereich 63 an dem Endabschnitt 60 und einer radial nach innen ragenden Wandung 46 an dem Nabengehäuse 2.

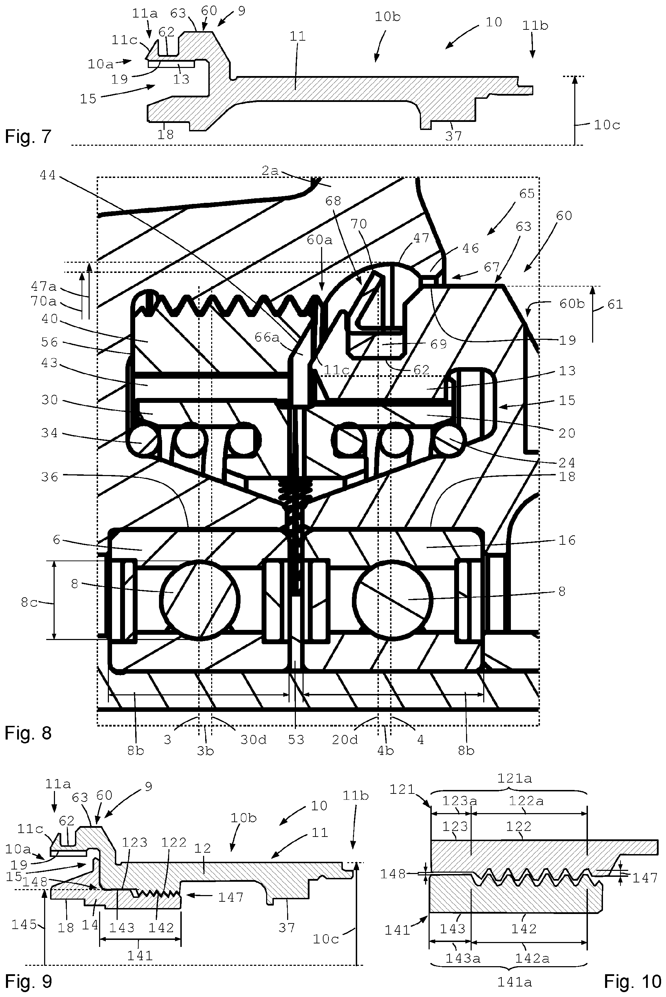

Von dort gesehen axial nach innen ist an dem Endabschnitt 60 radial außen eine Nut 62 ausgebildet, in der eine Dichtungseinheit 68 mit einem Ringabschnitt 69 aufgenommen ist. Von dem Ringabschnitt 69 erstreckt sich eine elastische Dichtlippe schräg aus der Nut 62 nach außen, sodass sich zwischen dem Ringabschnitt 69 und der elastischen Dichtlippe 70 ein V-förmiger Querschnitt ergibt, der axial nach außen zu dem äußeren Dichtspalt 67 hin geöffnet ist. Die Dichtlippe 70 ragt in eine Umfangsnut 47 (vergleiche Figur 8).

Axial noch weiter nach innen schließt sich ein konischer Spalt 66a bzw. Konusspalt an, der eine lichte Spaltweite 66b aufweist. Insgesamt umfasst die Dichtungseinrichtung 65 deshalb drei Dichtspalte, nämlich zum einen den Konusspalt 66a, dann den Spalt zwischen der elastischen Dichtlippe 70 und der Wandung der Dichtnut 47 in dem Nabengehäuse und den äußeren Dichtspalt 67 zwischen der Außenwandung 19 in dem vergrößerten Durchmesserbereich 63 an dem Endabschnitt 60 des Rotors 10.

In Figur 6a ist nochmals klar zu erkennen, dass sich die Querschnittsebene 4 durch die Wälzkörper 8a des nabenseitigen Rotorlagers 16, durch die Radialverzahnung 23 und durch die Dichtungseinheit 68 sowie den rotorseitigen Nabenflansch 2a erstreckt. Das nabenseitige Rotorlager 16 stützt die innere Radialwandung 18 des Rotorkörpers 11. Radial außerhalb davon ist die Aufnahme 15 angeordnet, in der die rotorseitige Zahnscheibeneinrichtung 20 drehfest mit dem Rotor 10 gekoppelt aufgenommen ist.

Oben links ist in Figur 6a noch zusätzlich eine stark schematische und perspektivische Ansicht der Spiralfeder 81 (oder 82) einer Vorspanneinrichtung 24, 34 der Nabe 1 zu sehen, die mit Bezug auf Figur 6c detaillierter beschrieben ist. Zu erkennen ist jedenfalls, dass die Spiralfeder 81 (wenigstens etwa) diagonal gegenüberliegende Windungsenden 84, 85 aufweist. Das verbessert auch in ungünstigen Situationen die Ausrichtung der Zahnscheibeneinrichtungen 20, 30. Die Spiralfeder 81 kann auch zur Vorbelastung einer Freilaufeinheit in die Ruheposition "R" in Umfangsrichtung dienen.

Durch den einfachen Aufbau können Montagefehler zuverlässig verhindert und die Funktion verbessert werden.

Figur 6b zeigt eine schematische Seitenansicht einer Spiralfeder 81, 82 einer Vorspanneinrichtung 24, 34 der Nabe 1. Die beiden Enden 84, 85 der Spiralfeder 81, 82 enden hier um (etwa) 180° versetzt zueinander und liegen diagonal gegenüber einander, sind aber entlang der Federachse 83 axial versetzt zueinander angeordnet. Die Spiralfedern 81, 82 weisen hier jeweils genau einen Windungsdraht 82 auf, der sich um die Federachse 83 herum erstreckt/gewickelt ist. Der Windungsdraht 82 kann sich zylindrisch erstrecken, kann aber insgesamt auch eine (leicht) konische oder kegelförmige Gestalt annehmen. Hier ist eine zylindrische Ausgestaltung gezeigt. Die Anzahl der Windungen 93 kann insbesondere 2,5 oder 3,5 oder 4,5 oder 5,5 betragen. Die halbe zusätzliche Windung sorgt dafür, dass sich die Windungsenden 84, 85 diagonal gegenüberliegen. Hier nicht sichtbare abgewinkelte Enden 34d, 34e der Spiralfedern 81, 82 können zum Eingriff in entsprechende Aufnahmen 20e, 30e bzw. 20f, 30f dienen.

Angedeutet ist in Figur 6b auch eine Projektionsfläche 89 auf eine Ebene 90 quer und insbesondere senkrecht zu einer Federachse 83. Die (gedachte) Projektionsfläche 89 entsteht durch eine Projektion bzw. den "Schattenwurf" der Spiralfeder 80, 81 auf die Ebene 90. Der Projektionsabschnitt 84a des Windungsendes 84 liegt diagonal von dem Projektionsabschnitt 85a des Windungsendes 85. Die (gedachte) Projektion erfolgt dabei in Richtung der Federachse 83 bzw. parallel dazu.

Figur 6c zeigt eine perspektivische Ansicht der Spiralfeder 80, 81, wobei der Durchmesser 92 des Windungsdrahtes 82 im Vergleich zu dem Außendurchmesser 91 der Spiralfeder 80, 81 zu erkennen ist. Das Verhältnis liegt hier zwischen 20 und 30 bei etwa 25.

Figur 6d zeigt eine Draufsicht auf eine Spiralfeder 80, 81 und damit auch die schon angesprochene (gedachte) Projektionsfläche 89. Die Windungsenden 84, 85 sind eingezeichnet und befinden sich in diagonal einander gegenüberliegenden Winkelsegmenten 88 bzw. 87. Ein Winkelsegment 87 ist hier kleiner 30° und insbesondere kleiner 15°. Es ergibt sich im dargestellten Beispiel ein Winkelabstand der beiden Windungsenden 84, 85 von 180°.

Zusätzlich eingezeichnet ist eine weitere gestrichelte Variante eines Windungsendes 84, bei der sich zwischen den Windungsenden 84, 85 der eingezeichnete Umfangswinkel 93 von nur etwa 165° ergibt. Alternativ kann auf der anderen Seite gemessen werden, sodass sich etwa 195° ergeben, da die beiden zusammen ja 360° ergeben müssen.

Durch die Ausgestaltung der Spiralfedern 80, 81 wird eine Verbesserung des Freilaufsystems erreicht. Es kann eine Verringerung von Fehl-Eingriffen (Skips) und eine Verringerung des Fehleingriffsrisikos durch die optimierte Spiralfeder erreicht werden.

Die Vorspanneinrichtungen 24, 34 müssen im Betrieb sehr schnell und genau ineinander eingreifen bzw. miteinander koppeln. Bei der Analyse von problematischen Fehl-Eingriffen (Skips) wurde festgestellt, dass eine derartige Spiralfeder in komprimierten Zustand eine nochmals verbesserte Reaktionskraft bewirkt. Dies führt durch die paarweise Anordnung der Spiralfedern an beiden Vorspanneinrichtungen 24, 34 zu verbesserten Eigenschaften. Die Vorspanneinrichtungen 24, 34 verdrehen sich im Freilauf-Fall zueinander. Im schlimmsten Fall ("Worst case Postion") sind die beiden Spiralfedern 80, 81 zueinander um 180° versetzt. In diesem Zustand wird durch diese Ausgestaltung der Spiralfedern 80, 81 eine stark ungleichmäßige Kraft verhindert und das Eingriffsverhalten verbessert.

Figur 7 zeigt einen schematischen Querschnitt durch den Rotorkörper 11 des Rotors 10, der sich von dem nabenseitigen Ende 11a zu dem äußeren Ende 11b erstreckt. Auf der Außenseite des Rotorkörpers 11 ist die Ritzelaufnahme 10b vorgesehen, die einen Außendurchmesser 10c aufweist, der geringer ist als der Durchmesser der inneren Radialverzahnungen 13 an der Aufnahme 15 für die rotorseitige Zahnscheibeneinrichtung 20.

An dem Endbereich 60 befindet sich der vergrößerte Durchmesserbereich 63, der eine Wandung des Dichtspalts 67 zu Verfügung stellt. In der umlaufenden Nut 62 kann die Dichtungseinheit 68 angeordnet werden. An dem nabenseitigen Ende 11a ist der konische Abschnitt 11c ausgebildet, der zusammen mit der konischen Vertiefung 44 an dem Gewindering 40 den inneren Dichtspalt 66 bzw. Konusspalt 66a ausbildet. Radial innen ist die innere Radialwandung 18 zu erkennen, an der sich der Rotor 10 auf dem nabenseitigen Rotorlager 16 abstützt.

Figur 8 zeigt ein vergrößertes Detail einer Variante von Figur 6, wobei im Unterschied zur Ausführung nach Fig. 5a identisch große Wälzlager 6, 16 (mit identischen Breiten 8b) als nabenseitiges Rotorlager 16 und als rotorseitiges Nabenlager 6 verwendet werden. Das erleichtert die Montage und die Vorratshaltung nochmals, da die Anzahl unterschiedlicher Teile noch weiter reduziert wird. Auch hier wird die rotorseitige Zahnscheibeneinrichtung 20 in der Aufnahme 15 des Rotorkörpers 11 aufgenommen. Die radiale Innenverzahnung 13 an der Außenwandung 19 führt die Radialverzahnung 23 der rotorseitigen Zahnscheibeneinrichtung 20 in axialer Richtung. Durch die Vorspanneinrichtung 24 wird die Stirnverzahnung 22 in Richtung auf das Nabengehäuse zu gedrückt.

Der Außendurchmesser 70a der elastischen Dichtlippe 70 ist größer als der Außendurchmesser 61 des äußeren Dichtspalts 67. Das führt dazu, das axial durch den Dichtspalt 67 eindringendes Wasser zu einer Verformung der Dichtlippe 70 führt, wodurch sich diese (stärker) an die Wandung der Dichtnut 47 anlegt und eine noch größere Dichtwirkung erzielt.

Eine zentrale Querschnittsebene 20d (zentrale Zahnscheibenebene) durch die Radialverzahnung 23 der rotorseitigen Zahnscheibe ist nur um einen geringen Abstand 4b von einer Querschnittsebene 4 (Wälzkörperebene) durch die Wälzkörper 8a des nabenseitigen Rotorlagers 16 entfernt. Die Entfernung 4b zwischen den Querschnittsebenen 20d und 4 ist insbesondere kleiner als ein halber Durchmesser bzw. als der Radius eines Wälzkörpers 8 und ist besonders bevorzugt auch kleiner als die kleinste Wandstärke der hohlen Nabenachse 5. Entsprechendes gilt auch für die zentrale Querschnittsebene 30d durch die axiale Mitte der Radialverzahnung der rotorseitigen Zahnscheibeneinrichtung 30. Auch hier ist der Abstand 3b zwischen den beiden Querschnittsebenen 3 (Wälzkörperebene) und 30d (zentrale Zahnscheibenebene) sehr klein und insbesondere kleiner als der halbe Durchmesser oder auch der halbe Radius eines Wälzkörpers 8a des rotorseitigen Nabenlagers 6.

Die zentrale Querschnittsebene 20d durch die Radialverzahnung 23 schneidet die Wälzkörper 8a des nabenseitigen Rotorlagers 16. Auch die zentrale Querschnittsebene 30d durch die Radialverzahnung 33 schneidet die Wälzkörper 8a des rotorseitigen Nabenlagers 6. Dadurch können effektiv auch höchste Kräfte abgeleitet werden. Die Abstände 3b und 4b sind sehr klein und kleiner als der halbe Durchmesser 8c oder sogar kleiner als der halbe Radius der Wälzkörper 8a.

Figur 9 zeigt eine Abwandlung des Rotors 10, der hier aus zwei Rotorteilen 12 und 14 besteht. Der Rotorkörper 11 verfügt hier über ein erstes Rotorteil 12, welches die Ritzelaufnahme 10b zur Verfügung stellt. Des Weiteren ist an dem ersten Rotorteil 12 die Wandung 37 ausgebildet, mittels derer der Rotor 10 über das äußere Rotorlager 17 auf der Nabenachse 5 gelagert wird. An dem zweiten Rotorteil 14 ist die innere Radialwandung 18 ausgebildet, über die sich der Rotor 10 auf dem nabenseitigen Rotorlager 16 drehbar auf der Nabenachse 5 abstützt.

Das zweite Rotorteil 14 ist mit dem ersten Rotorteil 12 verschraubt. Um eine exakte Führung und einen Rundlauf zu gewährleisten, was insbesondere beim Rotor sehr wichtig ist, verfügen das erste Rotorteil 12 und das zweite Rotorteil 14 jeweils über einen Verbindungsbereich 121 und einen Verbindungsabschnitt 141. Der Verbindungsbereich 121 umfasst einen Gewindebereich 122 und einen Führungsbereich 123. Der Verbindungsabschnitt 141 verfügt über einen Gewindeabschnitt 142 und einen Führungsabschnitt 143. Der Führungsabschnitt 143 weist einen Durchmesser 145 auf.

Eine Länge 141a des Verbindungsabschnitts 141 des zweiten Rotorteils 14 entspricht insbesondere wenigstens 1/4 oder 1/3 einer Länge 14a des zweiten Rotorteils 14, insbesondere zwischen einem Viertel und der Hälfte der Länge des Rotorkörpers 11.

Ein Verhältnis einer Länge 143a des Führungsabschnitts 143 zu einem Durchmesser 145 des Führungsabschnitts 143 ist größer als 1:10. Vorzugsweise ist ein Verhältnis einer Länge 143a des Führungsabschnitts 143 zu einer Länge 141a des Verbindungsabschnitts 141 größer als 1:4.

Im montierten Zustand sind der Gewindebereich 122 und der Gewindeabschnitt 142 miteinander verschraubt. Für die nötige Zentrierung sorgen der Führungsbereich 123 und der Führungsabschnitt 143. Dabei ist die radiale Toleranz in dem Führungsabschnitt 143 geringer als die radiale Toleranz zwischen dem Gewindebereich 122 und dem Gewindeabschnitt 142.

Figur 10 zeigt das Zusammenwirken von dem Verbindungsbereich 121 und dem Verbindungsabschnitt 141 in einer vergrößerten schematischen Darstellung. Der Verbindungsbereich 121 erstreckt sich über eine Länge 121a, die sich aus der Länge 122a des Gewindebereichs 122 und der Länge 123a des Führungsbereichs 123 zusammensetzt.

Dementsprechend ist an dem zweiten Rotorteil 14 ein Verbindungsabschnitt 141 ausgebildet, der sich über eine Länge 141a erstreckt. Der Verbindungsabschnitt 141 setzt sich aus dem Gewindeabschnitt 142 und dem Führungsabschnitt 143 zusammen, die sich über eine Länge 142a bzw. 143a erstrecken. An dem Gewindebereich 122 (bzw. dem Gewindeabschnitt 142) liegt eine engere Toleranz 148 vor als in dem miteinander verschraubten Führungsbereich 123 (bzw. Führungsabschnitt 143) mit einer Toleranz 147. Dadurch wird eine hohe Präzision und Wiederholbarkeit der radialen Ausrichtung des Rotors 10 gewährleistet.

Figuren 11a und 11b zeigen die hier identischen Zahnscheibeneinrichtungen 20, 30, die jeweils über einen Eingriffskörper 21, 31 und eine Stirnverzahnung 22, 32 sowie eine äußere Radialverzahnung 23, 33 verfügen. Die äußeren Radialverzahnungen 23, 33 erstrecken sich in axialer Richtung über eine axiale Länge 23a, 33a. Die axiale Erstreckung 21a, 31a der Eingriffskörper 21, 31 ist jeweils wenigstens um die axiale Breite der Stirnverzahnungen 22, 32 größer als eine axiale Länge 23a, 33a der äußeren Radialverzahnungen 23, 33. Ein lichter Innendurchmesser 20c ist größer als die Außendurchmesser der Wälzlager 6, 16. Der Außendurchmesser 22a, 32a ist hier größer als der Außendurchmesser 10c der Ritzelaufnahme 10b.

Die Zahl der Zähne der Stirnverzahnung ist vorzugsweise größer als 72 und kann auch 90, 100, 110 oder 120 oder mehr betragen.

Die äußeren Radialverzahnungen 23, 33 der Zahnscheibeneinrichtungen 20, 30 und die radialen Innenverzahnungen 13, 43 weisen vorzugsweise zwischen 3 und 20 Radialzähne auf. Hier im Ausführungsbeispiel in Fig. 11b umfasst eine der Zahnscheibeneinrichtungen 20, 30 etwa zwölf Radialzähne.

Eine radiale Erstreckung 22b, 32b der Stirnverzahnungen 22, 32 ist geringer als die axiale Länge 23a, 33a der Radialverzahnungen 23, 33.

In Figur 11b sind die axialen Eingriffselemente 32e und die nach außen ragenden Radialzähne 33d und die dazwischen angeordneten Radialnuten 33e erkennbar.

An dieser Stelle darauf hingewiesen, dass in allen Ausgestaltungen und Abwandlungen die axialen Eingriffselemente 32e nicht nur auf einer Fläche quer zur zentralen Achse angeordnet sein können, sondern auch auf einer mehr oder wenigen weniger kegelförmigen Fläche angeordnet sein können.

In den Figuren 12a, 12b und 12c sind Varianten des Gewinderings 40 dargestellt, der jeweils über eine axiale Breite 42 verfügt und auf dem Außenumfang über ein vorzugsweise mehrgängiges Gewinde verfügt, mit dem der Gewindering in ein entsprechendes Gewinde in dem Nabengehäuse 2 eingeschraubt wird.

Figur 12a zeigt eine Ausgestaltung, wobei hier wieder ein Ringelement 39 mit einem Dämpferelement 39a oder Einstellelement 39b abgebildet ist, um die Eigenschaften der Fahrradkomponente gezielt einzustellen und insbesondere zu reduzieren.

Fig. 12b zeigt eine Variante, bei der an dem rotorseitigen Ende 40a des Gewinderings 40 eine zentrale Vertiefung 44 hier in Form einer Anfasung bzw. konischen Vertiefung 44 ausgebildet ist, die unter einem Winkel 44a von zum Beispiel 30° verläuft und eine Tiefe 44b aufweist.

Der Gewindering 40 ist im bestimmungsgemäß montierten Zustand in das Nabengehäuse 2 eingeschraubt. Die nabenseitige Zahnscheibeneinrichtung 30 der Freilaufeinrichtung 9 ist darin aufgenommen. Die Stirnverzahnung 32 weist in Richtung des Rotors 10 und wird über eine Vorspanneinrichtung 24 in die Eingriffsstellung (E) vorbelastet.

Der Gewindering 40 weist eine Außenkontur 41d mit einem Außengewinde 41 auf und verfügt über eine zentrale Durchgangsöffnung 40c mit einer Innenkontur 40d. Die Innenkontur 40d verfügt über eine unrunde innere Koppelkontur 43b, die mit einer passenden unrunden äußeren Koppelkontur 33b auf dem Außenumfang 33c der nabenseitigen Zahnscheibeneinrichtung 30 in Antriebsrichtung in der Antriebspsoition "A" drehfest koppelt. Die innere Koppelkontur 43b kann sich über die gesamte Länge oder nur einen Teil der Länge der Innenkontur 40d erstrecken.

Der Gewindering 40 kann am rotorseitigen Ende 40a eine zentrale Vertiefung 44 aufweisen, sodass sich das Außengewinde 41 an dem Gewindering 40 axial weiter nach außen in Richtung auf den Rotor 10 erstreckt als die innere Koppelkontur 43b. Dadurch wird es möglich, das Außengewinde 41 des Gewinderings 40 in Richtung auf den Rotor 10 hin zu verbreitern. Es ist eine bessere Aufnahme des Gewinderings 40 in dem Nabengehäuse 2 möglich. Die Festigkeit wird verbessert. Das Außengewinde 41 wird verlängert.

Dadurch ist eine axiale Länge 41c des Außengewindes 41 größer als eine axiale Länge 33a der Koppelstruktur, die die innere Koppelkontur 43b und die äußere Koppelkontur 33b umfasst. Der Gewindering 40 wird mit dem Außengewinde 41 in ein Innengewinde 48 des Nabengehäuses 2 eingeschraubt.

Die nabenseitige Zahnscheibeneinrichtung 30 ist radial innerhalb des Gewinderings 40 über die Koppelstruktur 33b, 43b in Antriebsrichtung in der Antriebspsoition "A" drehfest und axial bewegbar aufgenommen. Der Gewindering 40 weist am rotorseitigen Ende 40a eine zentrale und hier zentrische Vertiefung 44 auf. Die axiale Breite 41c des Außengewindes 41 ist breiter als die axiale Breite 33a der Koppelstruktur.

Die zentrale Vertiefung 44 ist in der Variante nach Figur 12b als konische Vertiefung ausgebildet. Die Vertiefung 44 weist in allen Ausführungsbeispielen eine axiale Tiefe 44b von wenigstens 5% (und insbesondere wenigstens 10%) der axialen Breite 42 des Gewinderings 40 auf. Eine axiale Länge 41c der Außenkontur 41d des Gewinderings 40 ist größer als eine axiale Länge 43a der radialen Innenverzahnung 43 (als innerer Koppelkontur 43b).

Die axiale Tiefe 44b der zentralen Vertiefung 44 beträgt zwischen 5% und 25% der axialen Breite 42 des Gewinderings 40 und vorzugsweise zwischen 10% und 20% der axialen Breite 42 des Gewinderings 40. Die axiale Tiefe 44b der zentralen Vertiefung 44 liegt vorzugsweise zwischen 0,5 mm und 3 mm.

Die zentrale Vertiefung 44 kann in allen Ausgestaltungen auch gestuft und z.B. als abgestufte Vertiefung 44d ausgeführt sein, wie beispielsweise gestrichelt in Figur 12b angedeutet. Möglich ist auch eine abgestufte und konische Ausgestaltung. Vorzugsweise ist die zentrale Vertiefung 44 konisch oder auch bauchig als zentrische Anfasung ausgebildet. Ein Winkel oder Konuswinkel 44a der (konischen) Vertiefung 44 zu einer Ebene quer zu einer Symmetrieachse der Nabe oder Nabenachse liegt insbesondere zwischen 5% und 30°.

Ein an der Stirnseite 10a des Rotors 10 ausgebildeter Konusabschnitt 11c taucht im montierten Zustand berührungsfrei in die zentrale Vertiefung 44 an dem Gewindering 40 ein. Dazwischen wird ein Dichtspalt ausgebildet.

An dem anderen Ende 40b kann ein konischer Stützabschnitt 45 ausgebildet sein (vgl. Fig. 12c), der sich unter dem konischen Winkel 45a (z. B. 30°) erstreckt. Durch einen solchen konischen Stützabschnitt 45 kann axialer Bauraum spart werden. Möglich ist es aber auch, dass der Stützabschnitt 45 senkrecht zu Symmetrieachse ausgebildet ist. Das erleichtert die Fertigung.

Insgesamt wird eine vorteilhafte Fahrradkomponente 80 zur Verfügung gestellt, die einfach aufgebaut ist. Die Fahrradkomponente 80 kann als Nabe 1 ausgebildet sein und ist leicht zu montieren und verfügt nur über eine relativ geringe Teilezahl. Es wird eine hohe Stabilität erreicht. Durch eine hohe Zähnezahl der Stirnverzahnung kann ein geringer Eingriffswinkel zur Verfügung gestellt werden, wobei ein "Kickback" zuverlässig durch die Verschwenkbarkeit verhindert wird. Die Fahrradkomponente 80 kann auch als Austauschkit zur Verfügung gestellt werden, durch welches eine bisherige Nabe mit der Funktion nachgerüstet werden kann.

Durch die Anordnung der rotorseitigen Zahnscheibeneinrichtung 20 in der Aufnahme 15 in dem Rotor kann eine kompakte Nabe 1 zur Verfügung gestellt werden, bei der die rotorseitige Zahnscheibeneinrichtung 20 in der inneren Radialverzahnung 13 des Rotors geführt wird. Dadurch kann eine hochqualitative axiale Führung gewährleistet werden. Der große Durchmesser der Radialverzahnung und damit der axialen Führung verhindert das Verkippen und Verkanten und sorgt für eine zuverlässige Funktion.

**Bezugszeichenliste:**

| | | | |
|---|---|---|---|
| 1 | Nabe | 142a | Länge von 142 |
| 2 | Nabengehäuse | 143 | Führungsabschnitt |
| 2a, 2b | Nabenflansch | 143a | Länge von 143 |
| 2d | Dreheinheit | 145 | Durchmesser von 143 |
| 3 | Querschnittsebene, Wälzkörperebene | 147 | Toleranz von 142/122 |
| | | 148 | Toleranz von 143/123 |
| 3a | Abstand von 3, 4 | 15 | Aufnahme |
| 3b | Abstand 3, 30d | 16 | nabenseitiges Rotorlager |
| 4 | Querschnittsebene, Wälzkörperebene | 16a | axiale Breite |
| | | 16b | Außendurchmesser |
| 4b | Abstand 4, 20d | 17 | äußeres Rotorlager |
| 5 | Nabenachse | 18 | innere Radialwandung |
| 5a | Durchgangsöffnung | 19 | Außenwandung |
| 5b | Drehachse | 20 | rotorseitige Zahnscheibeneinrichtung |
| 6 | rotorseitiges Nabenlager | | |
| 6a | axiale Breite | 20a | Außendurchmesser |
| 6b | Außendurchmesser | 20b | axiale Breite |
| 7 | äußeres Nabenlager | 20c | lichter Innendurchmesser |
| 8 | Wälzlager | 20d | zentrale Querschnittsebene |
| 8a | Wälzkörper | | |
| 8b | axiale Breite | 21 | Eingriffskörper |
| 8c | Durchmesser 8a | 21a | axiale Erstreckung |
| 9 | Freilaufeinrichtung | 22 | Stirnverzahnung |
| 9a, 9b | Freilaufeinheit | 22a | Außendurchmesser |
| 9c-9d | Koppelkomponente(Nabe) | 22b | radiale Höhe |
| 9e-9f | Koppelkomponente (Rotor) | 22e | Eingriffselement |
| 10 | Rotor | 23 | Radialverzahnung |
| 10d | Dreheinheit | 23a | axiale Länge |
| 10a | nabenseitige Stirnseite | 23d | Radialzahn |
| 10b | Ritzelaufnahme | 23e | Radialnut |
| 10c | Außendurchmesser 10b | 24 | Vorspanneinrichtung |
| 11 | Rotorkörper | 24a | Halter |
| 11a | nabenseitiges Ende | 25 | Einbaulänge |
| 11b | äußeres Ende | 26,27 | Lagerabstand |
| 11c | Konusabschnitt | 28 | Abstand |
| 12 | erstes Rotorteil | 29 | Abstand |
| 121 | Verbindungsbereich | 30 | nabenseitige Zahnscheibeneinrichtung |
| 121a | Länge von 121 | | |
| 122 | Gewindebereich | 30a | Außendurchmesser |
| 122a | Länge von 122 | 30b | axiale Breite |
| 123 | Führungsbereich | 30c | lichter Innendurchmesser |
| 123a | Länge von 123 | 30d | zentrale Querschnittsebene |
| 13 | radiale Innenverzahnung | | |
| 14 | zweites Rotorteil | 30e | Aussparung für 34d |
| 141 | Verbindungsabschnitt | 30f | Aussparung für 34e |
| 141a | Länge von 141 | 31 | Eingriffskörper |
| 142 | Gewindeabschnitt | 31a | axiale Erstreckung |
| 32 | Stirnverzahnung | | Stützabschnitt |
| 32b | radiale Höhe | 45a | Winkel |
| 32e | Eingriffselement | 46 | Dichtwandung |
| 33 | Radialverzahnung | 47 | Dichtnut |
| 33a | axiale Länge | 47a | Durchmesser |
| 33b | äußere Koppelkontur | 48 | Gewinde in 2 |
| 33c | Außenumfang | 49a,b | Gewindegang |
| 33d | Radialzahn | 50,51 | Endanschlag |
| 33e | Radialnut | 52 | Hülsenkörper |
| 33f | Umfangslänge von 33d | 53 | Abstandhalter |
| 33g | Umfangslänge von 33e | 54,55 | radiale Verdickungen |
| 34 | Vorspanneinrichtung | 54a | Absatz |
| 34b | Vorbelastungseinrichtung | 55a | Absatz |
| 34c | Federeinheit | 56 | Aufnahmekontur (konisch) |
| 34d | Federende (abgewinkelt) | 58 | Spanneinrichtung |
| 34e | Federende (abgewinkelt) | 59 | Spannachse |
| 35 | Aufnahme | 59a | Endstück |
| 36 | Innenwandung | 59b | Durchmesser |
| 37 | Wandung | 60 | Endabschnitt |
| 38 | Bremsscheibenaufnahme | 60a | nabenseitiges Ende (60) |
| 39 | Ringelement | 60b | anderes Ende von 60 |
| 39a | Dämpferelement | 61 | Durchmesser |
| 39b | Einstellelement | 62 | Nut |
| 40 | Aufnahmering, Gewindering | 63 | vergrößerter Durchmesserbereich |
| 40a | rotorseitiges Ende, axiale Außenseite | 65 | Dichtungseinrichtung |
| | | 66 | innerer Dichtspalt |
| 40b | nabenseitiges Ende, axiale Innenseite | 66a | Konusspalt |
| | | 66b | lichte Spaltweite |
| 40c | zentrale Durchgangsöffnung | 67 | äußerer Dichtspalt |
| | | 67a | lichte Abmessung |
| 40d | Innenkontur von 40 | 68 | Dichtungseinheit |
| 41 | Außengewinde | 69 | Ringabschnitt |
| 41a,b | Gewindegang | 70 | Dichtlippe/elastische Wandung |
| 41c | axiale Länge | | |
| 41d | Außenkontur | 70a | Außendurchmesser |
| 42 | axiale Breite | 80,81 | Spiralfeder |
| 43 | radiale Innenverzahnung | 82 | Windungsdraht |
| 43a | axiale Länge | 83 | Federachse |
| 43b | innere Koppelkontur | 84 | Windungsende |
| 43d | Radialzahn | 84a | Projektionsabschnitt von 84 |
| 43e | Radialnut | | |
| 43f | Aufnahmenut | 85 | Windungsende |
| 44 | zentrale Vertiefung, konische Vertiefung | 85a | Projektionsabschnitt von 85 |
| 44a | Winkel | 86 | Diagonale |
| 44b | Tiefe | 87 | Winkelsegment |
| 44c | Höhe | 88 | Winkelsegment |
| 44d | abgestufte Vertiefung | 89 | Projektionsfläche |
| 45 | (konischer) | 90 | Ebene quer zu 83 |
| 91 | Durchmesser von 80,81 | 110 | Felge |
| 92 | Durchmesser von 82 | 111 | Ritzeleinrichtung |
| 93 | Umfangswinkel | 112 | Tretkurbel |
| 100 | Fahrrad | FW | Freiwinklel |
| 101 | Rad, Vorderrad | F | Freilaufzustand |
| 102 | Rad, Hinterrad | E | Eingriffsstellung |
| 103 | Rahmen | A | Antriebsstellung |
| 104 | Gabel, Federgabel | R | Ruheposition |
| 105 | Hinterraddämpfer | L1-L3 | Umfangslänge |
| 106 | Lenker | S1-S3 | Stellungen |
| 107 | Sattel | W1-W3 | Schwenkwinkel |
| 109 | Speiche | | |

## Patentansprüche

1. Fahrradkomponente (80) für ein wenigstens teilweise muskelbetriebenes Fahrzeug und insbesondere Fahrrad (100) mit wenigstens einer Freilaufeinheit (9a, 9b) einer Freilaufeinrichtung (9),
wobei die Freilaufeinheit (9a, 9b) eine Dreheinheit (2d, 10d) und eine mit der Dreheinheit (2d, 10d) koppelbare Zahnscheibeneinrichtung (20, 30) umfasst,
wobei die Zahnscheibeneinrichtung (20, 30) eine Stirnverzahnung (22,32) mit axialen Eingriffselementen (22e,32e) umfasst, welche geeignet zum Eingriff in korrespondierende Eingriffselemente (32e, 22e) einer anderen Zahnscheibeneinrichtung (30, 20) ist,
wobei die Zahnscheibeneinrichtung (20,30) und die Dreheinheit (2d, 10d) jeweils als miteinander koppelbare Koppelkomponenten (9c-9f) ausgebildet sind und jeweils eine Radialverzahnung (23,33) zum Eingriff ineinander aufweisen und gemeinsam um eine zentrale Drehachse (5b) drehbar sind,
**dadurch gekennzeichnet,**
**dass** in wenigstens einer Konfiguration (K2, K3) die Dreheinheit (2d, 10d) und die Zahnscheibeneinrichtung (20, 30) in Umfangsrichtung relativ zueinander zwischen einer Antriebsstellung (A) und einer Ruheposition (R) bewegbar sind, sodass vor Beginn einer Drehmomentübertragung erst eine Koppelkomponente (9c-9f) in Antriebsrichtung um einen Freiwinkel (FW) von wenigstens 5° gedreht werden muss, bis eine Drehmomentübertragung erfolgen kann, wenn sich die beiden Radialverzahnungen (33, 43) zuvor in der Ruheposition (R) befinden.

2. Fahrradkomponente (80) nach Anspruch 1, wobei die Koppelkomponenten (9c-9f) jeweils eine Radialverzahnung (23,33,13,43) mit abstehenden Radialzähnen (23c,33c,13c,43c) und dazwischen angeordneten Radialnuten (23d,33d,13d,43d) aufweisen und wobei die Radialverzahnung (23,33) der einen Koppelkomponente (9d, 9f; 20,30) als äußere Radialverzahnung und die Radialverzahnung (13,43) der anderen und damit zusammenwirkenden Koppelkomponente (9c, 9e; 40, 10) als innere Radialverzahnung ausgebildet ist.

3. Fahrradkomponente (80) nach dem vorhergehenden Anspruch, wobei im bestimmungsgemäßen Gebrauch wenigstens ein Radialzahn (33d,23d) der äußeren Radialverzahnung (33,23) in einer Radialnut (43e,13e) der inneren Radialverzahnung (43,13) angeordnet ist, um in der Antriebsstellung (A) ein Drehmoment in Antriebsrichtung zu übertragen.

4. Fahrradkomponente (80) nach einem der beiden vorhergehenden Ansprüchen, wobei eine Umfangslänge (33g) wenigstens einer Radialnut (33e) erheblich größer ist als eine entsprechende Umfangslänge (33f) eines Radialzahns (33d) auf einem bzw. dem gleichen Durchmesser um die zentrale Achse.

5. Fahrradkomponente (80) nach einem der beiden vorhergehenden Ansprüche, wobei wenigstens eine Zahnscheibeneinrichtung in wenigstens zwei unterschiedlichen Stellungen mit einer Dreheinheit (2d, 10d) koppelbar ist, wobei in den unterschiedlichen Stellungen (S1, S2, S3) unterschiedliche Schwenkwinkel (W1, W2, W3) zwischen den Koppelkomponenten (9c, 9d) einer Freilaufeinheit (9a, 9b) zur Verfügung stehen.

6. Fahrradkomponente (80) nach einem der beiden vorhergehenden Ansprüche, wobei eine Mehrzahl gleicher Radialzähne (33d) und Radialnuten (33e) auf dem Umfang wenigstens einer Koppelkomponente (9d) verteilt angeordnet ist.

7. Fahrradkomponente (80) nach dem vorhergehenden Anspruch, wobei wenigstens zwei Gruppen unterschiedlicher Radialzähne (43d) und/oder Radialnuten (43e) auf dem Umfang wenigstens einer Koppelkomponente (9c) verteilt angeordnet ist.

8. Fahrradkomponente (80) nach einem der vorhergehenden Ansprüche, wobei wenigstens eine Zahnscheibeneinrichtung (30,20) axial verschiebbar in einer Dreheinheit (2d, 10d) aufgenommen ist.

9. Fahrradkomponente (80) nach einem der vorhergehenden Ansprüche, wobei eine Dreheinheit (2d) als Nabenteil und/oder eine Dreheinheit (10d) als Rotorbauteil ausgebildet ist.

10. Fahrradkomponente (80) nach einem der vorhergehenden Ansprüche, wobei eine Vorbelastungseinrichtung (34b) wenigstens eine Freilaufeinheit (9a) in die Ruheposition in Umfangsrichtung vorbelastet.

11. Fahrradkomponente (80) nach einem der vorhergehenden Ansprüche, wobei eine Vorspanneinrichtung (34) die beiden Freilaufeinheiten (9a, 9b) in axialer Richtung in die Eingriffsstellung (E) vorspannt.

12. Fahrradkomponente (80) nach den beiden vorhergehenden Ansprüchen, wobei die Vorspanneinrichtung (34) als Vorbelastungseinrichtung (34b) dient und wenigstens eine Freilaufeinheit (9a, 9b) in die Ruheposition vorbelastet.

13. Fahrradkomponente (80) nach einem der vorhergehenden Ansprüche, wobei wenigstens ein Dämpferelement (39a) zwischen den zwei Koppelkomponenten (30, 40) einer Freilaufeinheit (9a) aufgenommen ist und/oder wobei eine wechselbare Einstelleinheit (39b) an einer Freilaufeinheit (9a, 9b) aufgenommen ist, um eine Einstellung des Umfangsweges zwischen Antriebsstellung (A) und Ruheposition (R) einzustellen.

14. Fahrradkomponente (80) für wenigstens teilweise muskelbetriebene Fahrzeuge und insbesondere Fahrräder (100) umfassend eine Nabenachse (5), eine Freilaufeinrichtung (9) und zwei Dreheinheiten (2d, 10d), wovon eine Dreheinheit mit einem Nabengehäuse (2) und die andere mit dem Rotor (10) verbunden ist,
wobei die Freilaufeinrichtung (9) zwei Freilaufeinheiten (9a, 9b) umfasst, nämlich eine nabenseitige Freilaufeinheit (9a) und eine rotorseitige Freilaufeinheit (9b),
wobei die nabenseitige Freilaufeinheit eine mit dem Nabengehäuse gekoppelte Dreheinheit (2d) und eine nabenseitige Zahnscheibeneinrichtung (30) umfasst,
und wobei die rotorseitige Freilaufeinheit (9b) eine mit dem Rotor gekoppelte Dreheinheit (10d) und eine rotorseitige Zahnscheibeneinrichtung (30) umfasst,
wobei die nabenseitige und die rotorseitige Zahnscheibeneinrichtungen (30, 20) jeweils eine Stirnverzahnung (32, 22) zum Eingriff ineinander aufweisen, und über wenigstens eine Vorspanneinrichtung (24, 34) in eine (axiale) Eingriffsstellung (E) vorbelastet werden,
wobei wenigstens eine Dreheinheit (2d, 10d) und die zugehörige Zahnscheibeneinrichtung (30,20) als separate und miteinander koppelbare Koppelkomponenten (9c, 9d; 9e, 9f) ausgebildet sind und jeweils eine Radialverzahnung (23,33) zum Eingriff ineinander aufweisen und gemeinsam um eine zentrale Drehachse drehbar sind,
**dadurch gekennzeichnet,**
**dass** in wenigstens einer Konfiguration (K2, K3) die Dreheinheit (2d, 10d) und die Zahnscheibeneinrichtung (30, 20) in Umfangsrichtung relativ zueinander zwischen einer Antriebsstellung (A) und einer Ruheposition (R) um einen Freiwinkel (FW) von wenigstens 5° bewegbar sind, sodass vor Beginn einer Drehmomentübertragung erst eine Koppelkomponente in Antriebsrichtung gedreht werden muss, bis eine Drehmomentübertragung erfolgt/erfolgen kann, wenn sich die beiden Radialverzahnungen zuvor in der Ruheposition (R) befinden.

15. Fahrradkomponente (80) nach dem vorhergehenden Anspruch,
wobei das Nabengehäuse (2) mit wenigstens zwei axial voneinander beabstandeten Nabenlagern (6, 7) drehbar gelagert ist, nämlich wenigstens einem näher an dem Rotor (10) angeordneten rotorseitigem Nabenlager (6) und wenigstens einem weiter von dem Rotor (10) entfernten äußeren Nabenlager (7),
und wobei der Rotor (10) mit wenigstens zwei axial voneinander beabstandeten Rotorlagern (16, 17) drehbar gelagert ist, nämlich einem näher an dem Nabengehäuse (2) angeordneten nabenseitigen Rotorlager (16) und wenigstens einem weiter von dem Nabengehäuse (2) entfernten äußeren Rotorlager (17).
